# EUROPEAN PATENT SPECIFICATION

(11) **EP 3 842 676 B1**
(45) Date of publication and mention of the grant of the patent: **02.08.2023**
(21) Application number: 19851650.2
(22) Date of filing: 02.08.2019
(51) Int. Cl.: F16K 11/065, F16K 25/02, F16K 31/122, F25B 13/00, F16K 31/06

(54) **FLOW CHANNEL SWITCHING VALVE**
STRÖMUNGSKANALUMSCHALTVENTIL
SOUPAPE DE COMMUTATION DE PASSAGE D'ÉCOULEMENT

(30) Priority: 23.08.2018 JP 2018156507
(43) Date of publication of application: 30.06.2021
(73) Proprietor: Fujikoki Corporation, Tokyo 158-0082 (JP)
(72) Inventor: KIBUNE Hitoshi, Tokyo 158-0082 (JP); FUJITA Naotaka, Tokyo 158-0082 (JP)
(74) Representative: Ter Meer Steinmeister & Partner
(86) International application number: PCT/JP2019/030394
(87) International publication number: WO 2020/039889

(56) References cited:
- CN-A- 105 333 167
- JP-A- 2008 138 995
- JP-A- 2012 002 279
- JP-A- 2013 227 994
- JP-A- 2018 044 666
- JP-A- 2018 044 666
- JP-A- 2018 179 058
- JP-A- 2019 065 895
- US-A- 4 966 194
- US-A1- 2006 048 828

## Description

### Technical Field

The present invention relates to a flow channel switching valve that switches a flow channel by moving a valve element. For example, the present invention relates to a flow channel switching valve suitable for switching a flow channel in a heat pump cooling and heating system or the like.

### Background Art

A typical heat pump cooling and heating system, such as an indoor air conditioner, includes a flow channel switching valve (e.g., four-way switching valve or six-way switching valve) as a means to switch a flow channel (i.e., flow direction) in addition to a compressor, an outdoor heat exchanger, an indoor heat exchanger, an expansion valve, and the like, and is adapted to switch the operation mode (between cooling operation and heating operation) with the flow channel switching valve.

A well-known flow channel switching valve assembled into such a heat pump cooling and heating system or the like includes one slide-type main valve element that is slidably arranged within a valve body (i.e., main valve housing) (for example, see Patent Literature 1 below or the like). Instead of this, there is also proposed a flow channel switching valve including a plurality of slide-type valve elements that is integrally used, as disclosed in for example Patent Literature 2 below. Document JP 2018 044666 A discloses a flow channel switching valve according to the preamble of claim 1.

This slide-type flow channel switching valve (i.e., six-way switching valve) includes a tubular main valve housing that forms a main valve chamber, main valve mounts arranged on the opposite sides of the main valve housing (i.e., main valve chamber) with respect to its axis, each having a valve seat face with three ports (six ports in total), and a slide-type main valve element arranged within the main valve chamber in a movable manner in the axial direction and being slidably in contact with the valve seat faces, the main valve element including a first slide valve element (i.e., high-pressure side slide valve element) and a second slide valve element (i.e., low-pressure side slide valve element), the first slide valve element (i.e., high-pressure side slide valve element) having a first U-turn passage (i.e., high-pressure side U-turn passage) that allows two ports of the three ports to selectively communicate with each other, the second slide valve element (i.e., low-pressure side slide valve element) having a second U-turn passage (i.e., low-pressure side U-turn passage) that allows two ports of the other three ports to selectively communicate with each other, the slide valve elements being arranged such that the first and second U-turn passages open in the opposite directions with their backs facing each other, the slide valve elements being integrally movable in the axial direction and individually slidable in a direction perpendicular to the axis. Movement of the main valve element within the main valve chamber switches the ports (i.e., flow channels) that communicate with each other via the U-turn passages.

Furthermore, in the above-described slide-type flow channel switching valve (i.e., six-way switching valve), a relatively high-pressure fluid is introduced into the first U-turn passage (i.e., high-pressure side U-turn passage) of the first slide valve element (i.e., high-pressure side slide valve element), and a relatively low-pressure fluid is introduced into the second U-turn passage (i.e., low-pressure side U-turn passage) of the second slide valve element (i.e., low- pressure side slide valve element), and a pressure chamber is provided between the high-pressure side slide valve element and the low-pressure side slide valve element to receive part of the high-pressure fluid introduced into the high- pressure side U-turn passage. As seen in the direction perpendicular to the axis, the pressure receiving area of the high-pressure side slide valve element adjacent to the pressure chamber (i.e., on the back pressure side) is set larger than the pressure receiving area of the high-pressure side slide valve element adjacent to the main valve mount provided with three ports, specifically, the opening area of the high-pressure side U-turn passage of the high-pressure side slide valve element.

In this configuration, when a high-pressure refrigerant is introduced into the high-pressure side U-turn passage and part of the high-pressure refrigerant introduced into the high-pressure side U-turn passage is filled into the pressure chamber, an annular seal face of the high-pressure side slide valve element is pressed against the valve seat face of the main valve mount due to the pressure difference between the pressure applied by the pressure chamber (or the high- pressure refrigerant therein) and the pressure applied by the refrigerant (i.e., high-pressure refrigerant) flowing through the high-pressure side U-turn passage. This reduces valve leakage. JP 2018 044666 A discloses a 6-way change-over valve, wherein at least a first U-turn passage and a second U-turn passage are arranged within a valve body, enabling a selective application to be attained between different communication states of ports by moving the valve body within a valve chamber. Further background art regarding flow channel switching valves are described in patent literatures 3 and 4.

### Citation List

### Patent Literature

Patent Literature 1: JP H08-170864 A
Patent Literature 2: JP 2018-044666 A
Patent Literature 3: US 2006/048828 A1
Patent Literature 4: US 4 966 194 A

### Summary of Invention Technical Problem

By the way, in the above-described flow channel switching valve, it is already known to increase a sealing property by, for example, forming the annular seal face of the slide valve element only around the opening of the U-turn passage to reduce the area (i.e., area in which the annular seal face contacts the valve seat face) of the annular seal face of the slide valve element that is pressed against the valve seat face of the main valve mount and increase the pressing force (i.e., contact pressure) of the annular seal face against the valve seat face.

However, if the area of the annular seal face of the slide valve element is reduced as described above, the annular seal face of the slide valve element tends to be caught on a port (or its edge in the axial direction (moving direction), in particular) opening on the valve sheet face of the main valve mount when the slide valve element slides on the valve seat face of the main valve mount upon switching a flow channel. This may cause blocking of the movement of the slide valve element, scratching or deforming of the annular seal face or the port opening on the valve seat face, for example, thereby reducing the sealing property, operability, and durability of the flow channel switching valve. Furthermore, if the area of the annular seal face of the slide valve element is reduced, the slide valve element may tend to rattle on the valve seat face of the main valve mount.

The present invention has been made in view of the foregoing, and it is an object of the present invention to provide a flow channel switching valve that can prevent the annular seal face of the slide valve element from being caught on the port opening on the valve seat face of the main valve mount, with a simple configuration.

### Solution to Problem

In view of the foregoing, a flow channel switching valve according to the present invention is characterized by the features of claim 1. Preferred embodiments of the invention are defined by the subclaims. This flow channel switching valve basically includes a main valve housing forming a main valve chamber; a first main valve mount arranged within the main valve chamber, the first main valve mount having a valve seat face with a plurality of ports; a second main valve mount arranged within the main valve chamber opposite to the first main valve mount with respect to an axis of the main valve chamber, the second main valve mount having a valve seat face with a plurality of ports; and a main valve element arranged within the main valve chamber in a movable manner in the axial direction, the main valve element including a pair of slide valve elements of a high-pressure side slide valve element and a low-pressure side slide valve element, the high-pressure side slide valve element being slidable on the valve seat face of the first main valve mount and having a high-pressure side U-turn passage adapted to receive a relatively high-pressure fluid, the low-pressure side slide valve element being slidable on the valve seat face of the second main valve mount and having a low-pressure side U-turn passage adapted to receive a relatively low-pressure fluid, in which: the pair of slide valve elements is integrally movable in the axial direction and individually slidable in a direction perpendicular to the axis, the main valve element is moved within the main valve chamber so that communication of the plurality of ports in each of the first main valve mount and the second main valve mount is switched, the pair of slide valve elements includes an annular seal face around an opening of the high-pressure side U-turn passage of the high-pressure side slide valve element, the annular seal face being adapted to be in contact with the valve seat face, and a protruding face portion is provided outside of the annular seal face of the high-pressure side slide valve element in the axial direction, the protruding face portion having a height equal to that of the annular seal face.

In a preferred aspect, the protruding face portion is provided so as to extend in the axial direction.

In another preferred aspect, the protruding face portion is provided at least in a central portion of the annular seal face in a width direction.

In another preferred aspect, the protruding face portion is provided at least in each of opposite side portions of the annular seal face in a width direction.

In another preferred aspect, the protruding face portion is provided across an entire width of the annular seal face.

In another preferred aspect, the protruding face portion is provided so as to be continuous to an end portion of the annular seal face in the axial direction.

According to the present invention, the protruding face portion is provided so as to be separated from an end portion of the annular seal face in the axial direction.

In another preferred aspect, the protruding face portion is provided toward the axial direction from a central portion of the annular seal face in a width direction, and the protruding face portion is provided toward the axial direction from each of opposite side portions of the annular seal face in the width direction and so as to be separated from the annular seal face.

In another preferred aspect, the annular seal face is formed around the opening of the high-pressure side U-turn passage, the annular seal face having a predetermined width.

In another preferred aspect, as seen in the direction perpendicular to the axis, an outer shape of a pressure receiving face of the high-pressure side slide valve element adjacent to the low-pressure side slide valve element is set larger than an outer shape of the annular seal face.

In further preferred aspect, an annular seal member is disposed between the high-pressure side slide valve element and the low-pressure side slide valve element, and an outer shape of the seal member is set larger than the outer shape of the annular seal face.

In still another preferred aspect, the high-pressure side slide valve element has a tubular shape, the low-pressure side slide valve element includes in one side face thereof a fitting protrusion slidably fitted in the high-pressure side slide valve element, when the fitting protrusion is fitted in the high-pressure side slide valve element, an inner peripheral face of the high-pressure side slide valve element and an end face of the fitting protrusion form the high-pressure side U- turn passage, the high-pressure side slide valve element and the low-pressure side slide valve element are integrally movable in the axial direction and individually slidable in the direction perpendicular to the axis, and the low-pressure side slide valve element includes in another side face thereof the low-pressure side U-turn passage.

A flow channel switching valve according to the present invention basically includes a tubular main valve housing forming a main valve chamber; a main valve mount having a valve seat face with a plurality of ports aligning in an axial direction; and a slide-type main valve element arranged within the main valve chamber in a movable manner in the axial direction and being adapted to be slidably in contact with the valve seat face, the main valve element including a U- turn passage adapted to allow the plurality of ports to selectively communicate with each other and an annular seal face formed around an opening of the U-turn passage, the annular seal face being adapted to be in contact with the valve seat face, the main valve element being moved within the main valve chamber so that communication of the plurality of ports is switched, in which a protruding face portion is provided outside of the annular seal face of the main valve element in the axial direction, the protruding face portion having a height equal to that of the annular seal face.

### Advantageous Effects of Invention

In the flow channel switching valve according to the present invention, since the protruding face portion having a height equal to that of the annular seal face is located outside of the annular seal face of the high-pressure side slide valve element in the axial direction, the protruding face portion allows the annular seal face of the high-pressure side slide valve element to easily pass over the port opening on the valve seat face of the main valve mount, and it is possible to effectively prevent the annular seal face of the high-pressure side slide valve element from being caught on the port and reduce the rattle of the high-pressure side slide valve element on the valve seat face of the main valve mount. This can effectively increase the sealing property, operability, durability, and stability of the flow channel switching valve, for example.

In addition, since the protruding face portion is provided at least in each of the opposite side portions of the annular seal face in the width direction, even when the high-pressure side slide valve element in a state of being inclined slides on the valve seat face of the main valve mount, the protruding face portion comes into contact with the valve seat face of the main valve mount before the annular seal face (or one side portion thereof) of the high-pressure side slide valve element comes into contact with the valve seat face of the main valve mount. This can certainly increase the durability of the flow channel switching valve.

In addition, since the protruding face portion is provided across the entire width of the annular seal face, the protruding face portion allows the annular seal face of the high-pressure side slide valve element to easily pass over the port opening on the valve seat face of the main valve mount more certainly. This can more effectively prevent the annular seal face of the high-pressure side slide valve element from being caught on the port and further reduce the rattle of the high-pressure side slide valve element on the valve seat face of the main valve mount.

In addition, since the protruding face portion is provided so as to be continuous to the end portion of the annular seal face in the axial direction, it is possible to more certainly prevent the annular seal face of the high-pressure side slide valve element from being caught on the port and more certainly reduce the rattle of the high-pressure side slide valve element on the valve seat face of the main valve mount.

In addition, since the protruding face portion is provided so as to be separated from the end portion of the annular seal face in the axial direction, it is possible to easily control the distribution of pressure (i.e., contact pressure) on the annular seal face of the high-pressure side slide valve element. This can effectively increase the sealing property, operability, durability, and stability of the flow channel switching valve, for example. Furthermore, the annular seal face and the protruding face portion have a groove formed therebetween, which functions as a foreign matter discharge passage. This can also effectively prevent foreign matter from accumulating between the annular seal face and the valve seat face.

The problems to be solved, configurations, and operational advantages other than those described above will become clear from the embodiments described below.

### Brief Description of Drawings

Fig. 1 is a vertical cross-sectional view showing a first communication state (during cooling operation) of a first example of a flow channel switching valve not representing the present invention.
Fig. 2 is a vertical cross-sectional view showing a second communication state (during heating operation) of the first example of the flow channel switching valve not representing the present invention.
Fig. 3 is an enlarged vertical cross-sectional view of a main part of the flow channel switching valve illustrated in Fig. 1.
Fig. 4 is a cross-sectional view in the direction of the arrow V-V in Fig. 3.
Fig. 5 is a cross-sectional view in the direction of the arrow W-W in Fig. 3.
Fig. 6 is a cross-sectional view in the direction of the arrow U-U in Fig. 1.
Fig. 7 is a perspective view of a main valve element and a coupling body of the first example of a flow channel switching valve not representing the present invention.
Fig. 8A is an enlarged vertical cross-sectional view showing a first communication state (during cooling operation)(i.e., when current is not supplied) of a four-way pilot valve to be used in a flow channel switching valve not representing the present invention.
Fig. 8B is an enlarged vertical cross-sectional view showing a second communication state (during heating operation) (i.e., when current is supplied) of a four-way pilot valve to be used in a flow channel switching valve not representing the present invention.
Fig. 9 is a cross-sectional view in the direction of the arrow W-W in Fig. 3 according to a second example of a flow channel switching valve not representing the present invention.
Fig. 10 is a cross-sectional view in the direction of the arrow W-W in Fig. 3 according to a first embodiment of the flow channel switching valve in accordance with the present invention.
Fig. 11 is a perspective view showing a main valve element and a coupling body of the first embodiment of the flow channel switching valve in accordance with the present invention.
Fig. 12 is a cross-sectional view in the direction of the arrow W-W in Fig. 3 according to a second embodiment of the flow channel switching valve in accordance with the present invention.
Fig. 13 is a perspective view showing a main valve element and a coupling body of the second embodiment of the flow channel switching valve in accordance with the present invention.
Fig. 14 is a cross-sectional view in the direction of the arrow W-W in Fig. 3 according to a third embodiment of the flow channel switching valve in accordance with the present invention.
Fig. 15 is a perspective view showing a main valve element and a coupling body of the third embodiment of the flow channel switching valve in accordance with the present invention.

### Description of Embodiments

Hereinafter, embodiments of the present invention and examples not representing the present invention as technical background will be described with reference to the drawings.

### (First example)

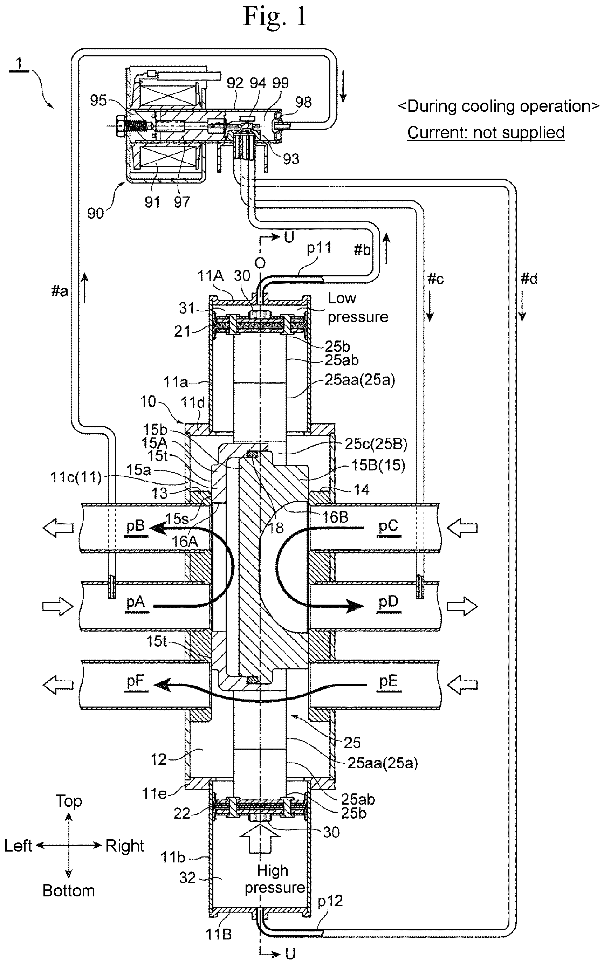

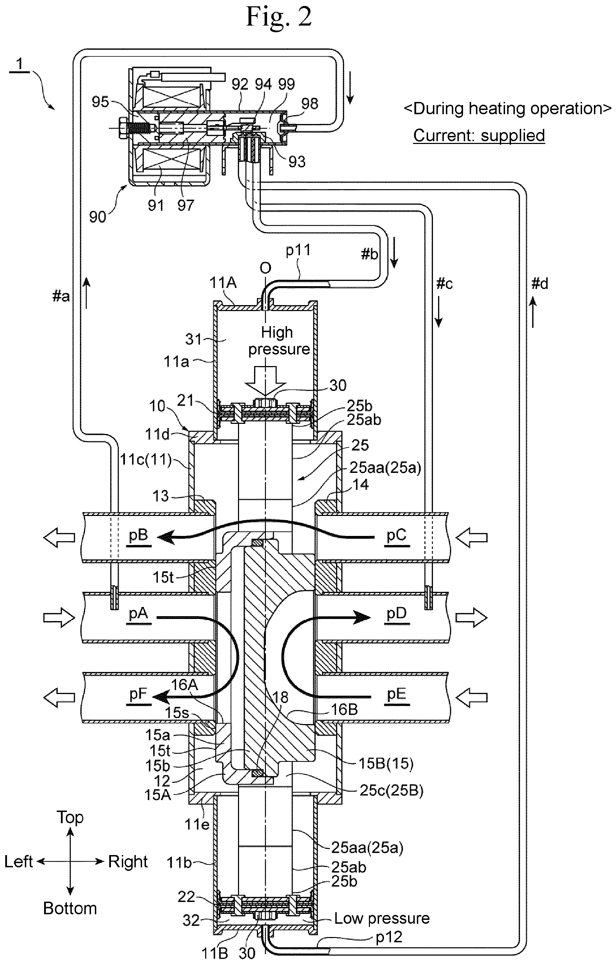

Fig. 1 and Fig. 2 are vertical cross-sectional views showing a first example of the flow channel switching valve (i.e., six-way switching valve) not representing the present invention. Fig. 1 illustrates a first communication state (during cooling operation), and Fig. 2 illustrates a second communication state (during heating operation).

It should be noted that in this specification, descriptions indicating positions or directions, such as top (upper), bottom (lower), left, right, front, and rear (back), are given for the sake of convenience in accordance with the drawings to avoid making explanation complicated, and do not always indicate the positions or directions while the valve is actually assembled into a heat pump cooling and heating system or the like.

Further, in each drawing, a gap formed between some members, a clearance between some members, and the like may be depicted larger or smaller than their actual dimensions to help understand the present invention and also for the sake of convenience to create the drawing.

The flow channel switching valve 1 of the example illustrated in the drawings is a slide-type flow channel switching valve to be used as a six-way switching valve in a heat pump cooling and heating system, for example, and basically includes a six-way valve body 10 of a cylinder type and a single electromagnetic four-way pilot valve 90 as a pilot valve. It should be noted that the flow channel switching valve 1 of the example includes six ports, to which reference numerals are given in a manner corresponding to ports pA to pF of the six-way switching valve disclosed in the aforementioned Patent Literature 1, 2. For the basic configurations of the heat pump cooling and heating system including the flow channel switching valve 1, refer to the aforementioned Patent Literature 1, 2.

### [Configuration of six-way valve body 10]

The six-way valve body 10 includes a tubular main valve housing 11 made of metal such as brass or stainless steel. In this main valve housing 11, a first operation chamber 31, a first piston 21, a main valve chamber 12, a second piston 22, and a second operation chamber 32 are disposed in this order from its end (i.e., upper end). The first and second pistons 21, 22 each include a gasket with a spring so that their outer peripheral portions come into pressure-contact with the inner peripheral face of the main valve housing 11 to hermetically divide the main valve housing 11.

Specifically, the main valve housing 11 includes a trunk portion 11c having a relatively large diameter and an open upper end to which a thick disk- like upper coupling cap 11d is hermetically attached. The upper coupling cap 11d has a central hole to which a first piston portion 11a made of a pipe member (having a relatively small diameter) is hermetically fixed through brazing or the like, and the first piston 21 is disposed in this first piston portion 11a. Likewise, the trunk portion 11c has an open lower end to which a thick disk-like lower coupling cap 11e is hermetically attached. The lower coupling cap 11e has a central hole to which a second piston portion 11b made of a pipe member (having a relatively small diameter) is hermetically fixed through brazing or the like, and the second piston 22 is disposed in this second piston portion 11b.

A thin disk-like upper end cap member 11A defining the first operation chamber 31 having a variable capacity is hermetically fixed to the upper end of the main valve housing 11 (or the first piston portion 11a thereof) through brazing or the like. A thin disk-like lower end cap member 11B defining the second operation chamber 32 having a variable capacity is hermetically fixed to the lower end of the main valve housing 11 (or the second piston portion 1 1b thereof) through brazing or the like. A port p11 and a port p12 are respectively attached to the upper end cap member 11A and the lower end cap member 11B (in the center thereof) to introduce/discharge a high-pressure fluid (i.e., refrigerant) into/from the first operation chamber 31 and the second operation chamber 32.

The main valve housing 11 (or the main valve chamber 12 thereof) includes six ports in total.

Specifically, in the center of the left part of the main valve chamber 12, a first main valve mount (i.e., valve seat) 13 made of metal, for example, and having a face (right face) as a flat valve seat face is hermetically fixed to the trunk portion 11c (or the inner periphery thereof) of the main valve housing 11 through brazing or the like. On the valve seat face of the first main valve mount 13, three ports (i.e., a port pB, a port pA, a port pF in this order from the upper end) each made of a pipe joint extending to the left align vertically (i.e., align in the direction along axis O) to open at approximately regular intervals.

Meanwhile, in the center of the right part of the main valve chamber 12 (i.e., the position facing the first main valve mount 13, that is, the position opposite to the first main valve mount 13 with respect to axis O), a second main valve mount (i.e., valve seat) 14 made of metal, for example, and having a face (left face) as a flat valve seat face is hermetically fixed to the trunk portion 11c (or the inner periphery thereof) of the main valve housing 11 through brazing or the like. On the valve seat face of the second main valve mount 14, three ports (i.e., a port pC, a port pD, a port pE in this order from the upper end) each made of a pipe joint extending to the right align vertically (i.e., align in the direction along axis O) to open at approximately regular intervals.

The ports (i.e., the port pB, the port pA, the port pF) provided in the first main valve mount 13 and the ports (i.e., the port pC, the port pD, the port pE) provided in the second main valve mount 14 are located to face each other (i.e., opposite to each other with respect to axis O), and in this example, the ports pA to pF provided in the first main valve mount 13 and the second main valve mount 14 have approximately the same diameter.

The main valve chamber 12, specifically, the trunk portion 11c of the main valve housing 11, includes a slide-type main valve element 15 that is movable in the direction along axis O (i.e., vertical direction), the main valve element 15 having a rectangular cross-section with an annular seal face (described later in detail) of a racetrack shape and having its opposite faces (i.e., left face and right face) slidably be in contact with the respective valve seat faces of the first main valve mount 13 and the second main valve mount 14. In this example, the dimensions of the main valve element 15 in the horizontal and front- to-back directions are substantially equal to or slightly larger than the outside diameter of the first piston portion 11a and the second piston portion 11b of the main valve housing 11.

The main valve element 15 is made of synthetic resin, for example, and is basically made up of two components, that is, a first slide valve element (i.e., high-pressure side slide valve element) 15A adjacent to the first main valve mount 13 (i.e., on the left side) and a second slide valve element (i.e., low- pressure side slide valve element) 15B adjacent to the second main valve mount 14 (i.e., on the right side).

The first slide valve element 15A has an approximately tubular shape, and has on the inner periphery of its left end (i.e., the end opposite to the second slide valve element 15B) an inner flanged portion 15a that is disposed in a (inwardly) protruding manner such that it defines an opening of a size that allows two adjacent ports (i.e., the port pB and the port pA, or the port pA and the port pF), of the three ports opening on the valve seat face of the first main valve mount 13, to selectively communicate with each other. The left end face (i.e., the end face adjacent to the first main valve mount 13) of the inner flanged portion 15a is the annular seal face 15s that is slidably in contact with the valve seat face of the first main valve mount 13.

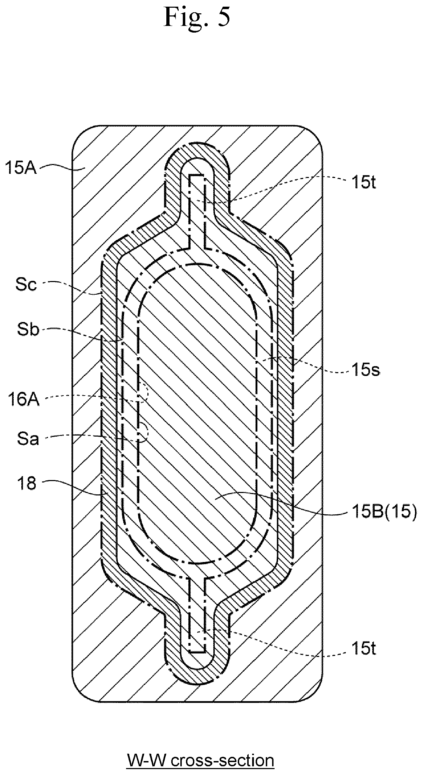

More specifically, in the present example, the annular seal face 15s on the left face (adjacent to the first main valve mount 13) of the first slide valve element 15A (or the inner flanged portion 15a thereof) is formed around the opening of the first U-turn passage (i.e., high-pressure side U-turn passage) 16A, which will be described later. The formation of the annular seal face 15s is limited to an area corresponding to a predetermined width of the annular seal face 15s (i.e., approximately a fixed width on the entire periphery) (in particular, see Fig. 5 to Fig. 7).

Furthermore, the upper end and the lower end (in other words, the opposite ends in the direction along axis O or in the moving direction) of the annular seal face 15s each include, at its central portion in the width direction (i.e., in the illustrated example, the front-to-back direction, or the direction perpendicular to axis O and parallel to the valve seat faces of the first and second main valve mounts 13, 14), an approximately bar-like protruding face portion 15t so as to be continuous to (i.e., so as to continuously extend to) the annular seal face 15s in the vertical direction (i.e., in the direction along axis O), the protruding face portion 15t having a height equal to that of the annular seal face 15s and having a width smaller than that of the annular seal face 15s (or the outer shape thereof) (in particular, see Fig. 5 to Fig. 7). In the illustrated example, the approximately bar-like protruding face portion 15t has a width that is approximately equal to the width (i.e., the predetermined width) of the annular seal face 15s having a racetrack shape formed around the opening of the first U- turn passage 16A.

With such a configuration, it is possible to reduce the contact area between the first slide valve element 15A (or the annular seal face 15s thereof) and the first main valve mount 13 (or the valve seat face thereof) and increase the pressing force (i.e., contact pressure) of the annular seal face 15s on the left face of the first slide valve element 15A against the valve seat face of the first main valve mount 13. At the same time, when the first slide valve element 15A slides on the valve seat face of the first main valve mount 13 in switching the flow channel, the annular seal face 15s of the first slide valve element 15A is less likely to be caught on the port opening on the valve seat face of the first main valve mount 13.

Meanwhile, on the right face (i.e., the side opposite to the first slide valve element 15A) of the second slide valve element 15B, a second U-turn passage (i.e., low-pressure side U-turn passage) 16B having a cup-like dent is provided to have a size that allows two adjacent ports (i.e., the port pC and the port pD, or the port pD and the port pE), of the three ports opening on the valve seat face of the second main valve mount 14, to selectively communicate with each other. The second slide valve element 15B has on its left face (i.e., the side face adjacent to the first slide valve element 15A) a fitting protrusion 15b that is provided in an (leftwardly) extending manner, the fitting protrusion 15b having an outer shape that is substantially equal to or slightly smaller than the inner shape of the tubular first slide valve element 15A.

When the fitting protrusion 15b of the second slide valve element 15B is slidably fitted into the tubular first slide valve element 15A (or the right part thereof) (with an O-ring 18 disposed in the step portion provided between the fitting protrusion 15b of the second slide valve element 15B and the tubular first slide valve element 15A), the inner peripheral face of the first slide valve element 15A and the left end face of the fitting protrusion 15b define the first U-turn passage (i.e., high-pressure side U-turn passage) 16A that allows two adjacent ports (i.e., the port pB and the port pA, or the port pA and the port pF), of the three ports opening on the valve seat face of the first main valve mount 13, to selectively communicate with each other. The first slide valve element 15A and the second slide valve element 15B are slightly movable individually in the horizontal direction (i.e., the direction perpendicular to axis O, in which the ports (i.e., the port pB, the port pA, the port pF) provided in the first main valve mount 13 face the ports (i.e., the port pC, the port pD, the port pE) provided in the second main valve mount 14, that is, a direction perpendicular to the valve seat faces of the first main valve mount 13 and the second main valve mount 14) and are integrally movable in the vertical direction (i.e., in the direction along axis O).

In other words, in the present example, the main valve element 15 is made up of a pair of the first slide valve element 15A and the second slide valve element 15B, the first slide valve element 15A having the first U-turn passage 16A that allows two adjacent ports of the three ports opening on the valve seat face of the first main valve mount 13 to selectively communicate with each other, the second slide valve element 15B having the second U-turn passage 16B that allows two adjacent ports of the three ports opening on the valve seat face of the second main valve mount 14 to selectively communicate with each other, and the pair of the first and second slide valve elements 15A, 15B is disposed such that their respective first and second U-turn passages 16A, 16B open in the opposite directions with their backs facing each other (in other words, in the direction perpendicular to the valve seat faces of the first and second main valve mounts 13, 14).

In the illustrated example, the O-ring 18 as an annular seal member is disposed between the step portion (i.e., inner peripheral step portion) formed on the inner periphery on the right end of the first slide valve element 15A and the step portion (i.e., outer peripheral step portion) formed on the outer periphery of the fitting protrusion 15b of the second slide valve element 15B. It is needless to mention that instead of the O-ring 18, a seal member such as a rip seal may be used.

In this configuration, the inner part of the first slide valve element 15A with respect to the O-ring 18, near the first main valve mount 13, receives a high- pressure fluid (i.e., refrigerant) through the first U-turn passage 16A via the port (i.e., discharge-side high-pressure port) pA, and the first U-turn passage 16A is sealed from the main valve chamber 12 by the O-ring 18 disposed therebetween.

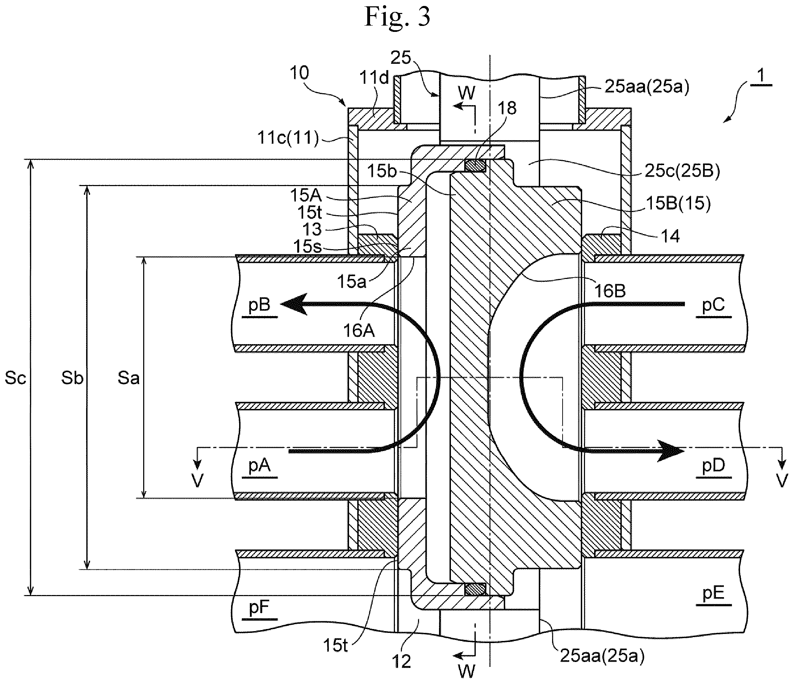

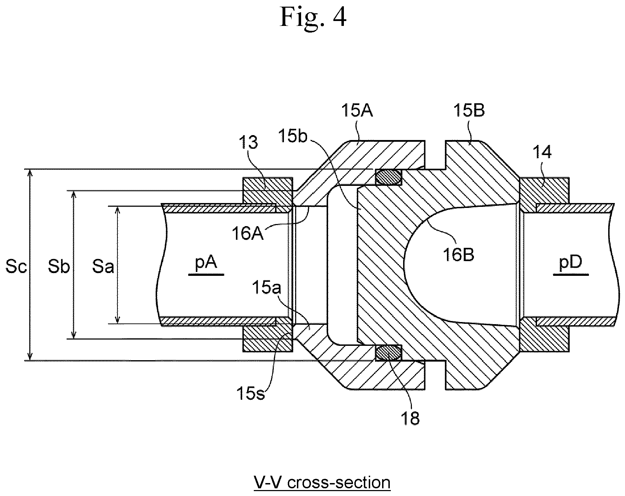

As clearly seen in Fig. 3 to Fig. 5 in conjunction with Fig. 1 and Fig. 2, as seen in the horizontal direction (i.e., the direction perpendicular to axis O), a pressure receiving area Sc on the right face (i.e., adjacent to the second slide valve element 15B, on the back pressure side) of the first slide valve element 15A is greater than a pressure receiving area Sa on the left face (i.e., adjacent to the first main valve mount 13) of the first slide valve element 15A.

More specifically, the projected area inside of the O-ring 18 on the plane perpendicular to the horizontal direction, that is, the projected area (i.e., pressure receiving area Sc) of the face on which the first slide valve element 15A (or the right face thereof) receives the leftward pressure by the high-pressure refrigerant introduced into the first U-turn passage 16A, is greater than the projected area (that is, herein, an area substantially equal to the projected area of the inner flanged portion 15a) of the inner edge of the annular seal face 15s adjacent to the first main valve mount 13 on the plane perpendicular to the horizontal direction, that is, the projected area (i.e., pressure receiving area Sa) of the face on which the first slide valve element 15A (or the left face thereof) receives the rightward pressure by the high-pressure refrigerant flowing through the port (i.e., inside of the annular seal face 15s).

In this configuration, when the high-pressure refrigerant is introduced into the first U-turn passage 16A via the port (i.e., discharge-side high-pressure port) pA, the right face of the second slide valve element 15B (or the annular seal face thereof) is pressed against the valve seat face of the second main valve mount 14 due to the pressure applied by the first U-turn passage 16A (or the high- pressure refrigerant flowing therethrough) (more specifically, the pressure difference between the pressure applied by the refrigerant (i.e., high-pressure refrigerant) flowing through the first U-turn passage 16A and the pressure applied by the refrigerant (i.e., low-pressure refrigerant) flowing through the second U- turn passage 16B), and the left face of the first slide valve element 15A (or the annular seal face 15s thereof) is pressed against the valve seat face of the first main valve mount 13 due to the pressure difference acting on the first slide valve element 15A in response to the difference (Sc-Sa) between the pressure receiving areas on the right face and the left face of the first slide valve element 15A.

Further, in the present example, in addition to the above configuration, as seen in the horizontal direction (i.e., the direction perpendicular to axis O), the outer shape (that is, the outer shape of the O-ring 18) of the pressure receiving area Sc on the right face (i.e., adjacent to the second slide valve element 15B, on the back pressure side) of the first slide valve element 15A is greater than the outer shape (of the entire periphery) of the contact area Sb of the annular seal face 15s and the protruding face portion 15t on the left face (i.e., adjacent to the first main valve mount 13) of the first slide valve element 15A. In other words, the outer shape (that is, the outer shape of the O-ring 18) of the pressure receiving area Sc on the right face of the first slide valve element 15A is located outside of the annular seal face 15s and the protruding face portion 15t.

This configuration makes the pressing force (i.e., contact pressure) of the left face of the first slide valve element 15A (or the annular seal face 15s thereof) against the valve seat face of the first main valve mount 13 approximately uniform.

It should be noted that an urging member (e.g., a ring-like plate spring, a compression coil spring) adapted to urge the first slide valve element 15A and the second slide valve element 15B in the opposite directions (i.e., in the direction to separate them from each other) may be disposed between the first slide valve element 15A and the second slide valve element 15B, for example, between the right face of the first slide valve element 15A and the stepped face (i.e., the leftward terrace face) forming the fitting protrusion 15b of the second slide valve element 15B, so as to allow the left face of the first slide valve element 15A (or the annular seal face thereof) to be in pressure-contact with (pressed against) the valve seat face of the first main valve mount 13 and allow the right face of the second slide valve element 15B (or the annular seal face thereof) to be in pressure-contact with (pressed against) the valve seat face of the second main valve mount 14.

As described above, the main valve element 15 includes the first slide valve element 15A and the second slide valve element 15B that are integrally moved in the direction along axis O, and is adapted to selectively operate in the cooling position (i.e., upper end position) as illustrated in Fig. 1, where the port pF is opened such that the port pB and the port pA are allowed to communicate with each other through the first U-turn passage 16A of the first slide valve element 15A, and the port pE is opened such that the port pC and the port pD are allowed to communicate with each other through the second U-turn passage 16B of the second slide valve element 15B, and the heating position (i.e., lower end position) as illustrated in Fig. 2, where the port pB is opened such that the port pA and the port pF are allowed to communicate with each other through the first U-turn passage 16A of the first slide valve element 15A, and the port pC is opened such that the port pD and the port pE are allowed to communicate with each other through the second U-turn passage 16B of the second slide valve element 15B.

The first slide valve element 15A of the main valve element 15 is located immediately above the two ports (i.e., the port pB and the port pA, or the port pA and the port pF) of the three ports except during the movement. Meanwhile, the second slide valve element 15B of the main valve element 15 is located immediately above the two ports (i.e., the port pC and the port pD, or the port pD and the port pE) of the three ports except during the movement. At this time, the first slide valve element 15A and the second slide valve element 15B of the main valve element 15 are respectively pressed to the left and to the right by the pressure applied by the high-pressure refrigerant introduced into the main valve element 15 (or the first U-turn passage 16A thereof) so as to be in pressure- contact with the valve seat faces of the first main valve mount 13 and the second main valve mount 14.

The first piston 21 and the second piston 22 are coupled in an integrally movable manner by a coupling body 25. The coupling body 25 has fitted therein the first slide valve element 15A and the second slide valve element 15B of the main valve element 15 and supports them in a state where they are slightly slidable in the horizontal direction and their movement in the front-to-back direction is substantially blocked.

In this example, the coupling body 25 is made up of a pair of plates having the same dimension and shape that is prepared by press-forming, for example. The plates are arranged along the horizontal direction (i.e., the direction perpendicular to the valve seat faces of the first main valve mount 13 and the second main valve mount 14) (in other words, so as to be in parallel with the plane perpendicular to the valve seat faces). The plates in the pair are disposed to face each other in the front-to-back direction, and the main valve element 15 is sandwiched between the plates in the pair (i.e., in the front-to-back direction). It should be noted that the plate disposed in the front of the main valve element 15 is called a coupling plate 25A, and the plate disposed in the rear of the main valve element 15 is called a coupling plate 25B.

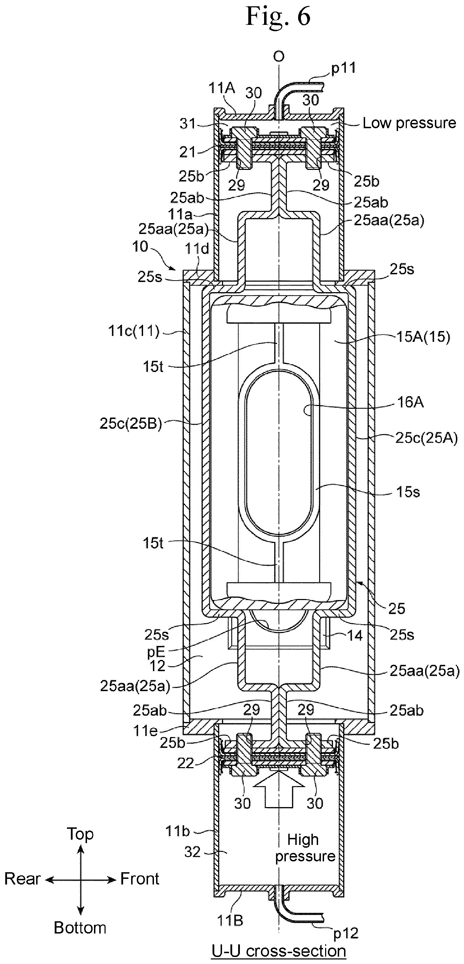

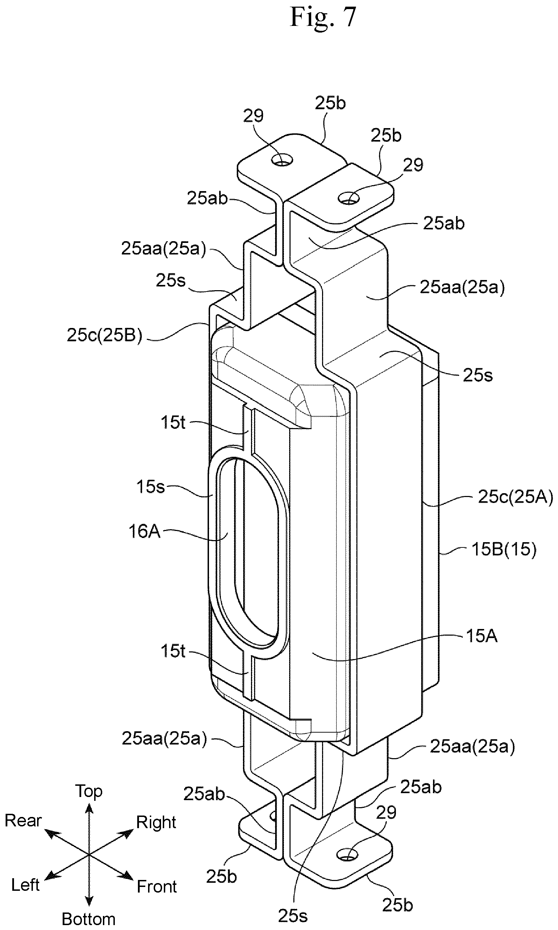

More specifically, as clearly seen in Fig. 6 and Fig. 7 in conjunction with Fig. 1 and Fig. 2, the coupling plates 25A, 25B is each made up of a plate having a vertical rectangular shape (in this example, the width is fixed throughout the height) that is symmetric with respect to the center line (i.e., line of symmetry) extending in the front-to-back direction from the center. The coupling plate 25A, 25B each include, in approximately the center (in the vertical direction) thereof, a support plate portion 25c having a shape (that is, an approximately recessed cross-section) conforming to the outer periphery of the main valve element 15 (i.e., the front face and the top and bottom faces, or the rear face and the top and bottom faces of the main valve element 15) so that the support plate portion 25c engages and supports the main valve element 15 (or the front part or the rear part thereof) in an integrally movable manner in the direction along axis O.

The top and bottom of the support plate portion 25c in each of the coupling plate 25A, 25B each include a coupling plate portion 25a extending to the first piston 21 or the second piston 22. The coupling plate portion 25a is formed in the shape of a step or a crank through bending, for example, and includes an offset plate portion 25aa and a contact plate portion 25ab in this order from the support plate portion 25c. The offset plate portion 25aa of the coupling plate portion 25a in the front coupling plate 25A is disposed on the front side with respect to axis O, in particular, as seen in the horizontal direction, on the front side with respect to and at a distance from the six ports pA to pF (in other words, in the position separated from the six ports pA to pF to the front) opening on the valve seat faces of the first main valve mount 13 and the second main valve mount 14. The offset plate portion 25aa of the coupling plate portion 25a in the rear coupling plate 25B is disposed on the rear side with respect to axis O, in particular, as seen in the horizontal direction, on the rear side with respect to and at a distance from the six ports pA to pF (in other words, in the position separated from the six ports pA to pF to the rear) opening on the valve seat faces of the first main valve mount 13 and the second main valve mount 14. More specifically, in this example, as seen in the horizontal direction, the adjacent offset plate portions 25aa of the coupling plate portions 25a in the pair of the coupling plate 25A and the coupling plate 25B are disposed at a distance from each other (in the front-to-back direction), the distance being larger than the diameter of the ports pA to pF opening on the valve seat faces of the first main valve mount 13 and the second main valve mount 14. The ports pA to pF (more specifically, the lower port pF and port pE in the cooling position (i.e., upper end position) as illustrated in Fig. 1, and the upper port pB and port pC in the heating position (i.e., lower end position) as illustrated in Fig. 2) are located between the adjacent offset plate portions 25aa of the coupling plate portions 25a in the pair of the coupling plate 25A and the coupling plate 25B (in particular, see Fig. 6).

In addition, the contact plate portion 25ab (i.e., the portion adjacent to the first piston 21 or the second piston 22, that is, the portion that does not overlap the ports pA to pF opening on the valve seat faces of the first main valve mount 13 and the second main valve mount 14) of the coupling plate portion 25a in one of the coupling plates 25A, 25B, which are disposed to face each other, is in contact with the contact plate portion 25ab of the coupling plate portion 25a in another of the coupling plates 25A, 25B in the opposite side. It should be noted that the contact plate portion 25ab may include a recess and protrusion or the like (e.g., alignment portion) for the alignment of the opposite coupling plates 25A, 25B, taking into consideration the assembly property and the like, which will be described later.

The upper and lower ends of each of the coupling plates 25A, 25B (or the coupling plate portion 25a thereof) each include a mounting leg portion 25b formed by bending to approximately 90° in the direction opposite to the direction in which the coupling plates 25B, 25A face each other (i.e., in the direction toward the support plate portion 25c having an approximately recessed cross- section). The mounting leg portion 25b includes a screw hole 29 into which a bolt 30 is inserted to couple the coupling plates 25A, 25B with the first piston 21 and the second piston 22.

Furthermore, in this example, the length in the vertical direction (i.e., the direction along axis O) of the coupling plate portion 25a (i.e., the sum of the length of the offset plate portion 25aa and the length of the contact plate portion 25ab) in each of the coupling plates 25A, 25B is set shorter than the length of the first piston portion 11a or the second piston portion 11b of the main valve housing 11. Accordingly, the upper coupling cap 11d (or the outer peripheral portion of the first piston portion 11a thereof) of the main valve housing 11 abuts the support plate portion 25c (or the upper end corner thereof) of the coupling body 25 (or each of the coupling plates 25A, 25B thereof) and blocks the upward movement of the coupling body 25 (i.e., the main valve element 15 fitted in the coupling body 25) as a stopper. Meanwhile, the lower coupling cap 11e (or the outer peripheral portion of the second piston portion 11b) of the main valve housing 11 abuts the support plate portion 25c (or the lower end corner thereof) of the coupling body 25 (or each of the coupling plates 25A, 25B thereof) and blocks the downward movement of the coupling body 25 (i.e., the main valve element 15 fitted in the coupling body 25) as a stopper.

In other words, in this example, the coupling body 25 (or the support plate portion 25c in each of the coupling plates 25A, 25B thereof) includes a stopper portion 25s that abuts the upper coupling cap 11d or the lower coupling cap 11e of the main valve housing 11 to limit the vertical movement of the main valve element 15.

As described above, since the coupling body 25 includes the stopper portion 25s for limiting the movement of the main valve element 15, it is possible to reduce the loads on the first and second pistons 21, 22 as compared to, for example, the configuration in which the upper end cap member 11A and the lower end cap member 11B act as a stopper for blocking the upward movement of the first piston 21 and the downward movement of the second piston 22. It is also possible to reduce the dimension accuracy of the components of the first and second pistons 21, 22 and the upper and lower end cap members 11A, 11B, for example, for limiting the position of the main valve element 15. As described above, it is needless to mention that the upper end cap member 11A and the lower end cap member 11B may act as a stopper for blocking the upward movement of the first piston 21 and the downward movement of the second piston 22 (i.e., the vertical movement of the main valve element 15).

In this example, as described above, since the coupling plates 25A, 25B are made up of the plates having the same dimension and shape, the two coupling plates 25A, 25B are disposed to face each other in the front-to-back direction, and the adjacent contact plate portions 25ab of the coupling plate portions 25a in both of the coupling plates 25A, 25B are combined and arranged in the opposite directions (more specifically, in the vertically reversed positions) to abut each other so as to fix the mounting leg portions 25b to the first piston 21 and the second piston 22 by the bolts 30. Then, the first slide valve element 15A and the second slide valve element 15B of the main valve element 15 are disposed (respectively in the horizontal directions) between the adjacent support plate portions 25c in the coupling plates 25A, 25B (i.e., in the space with an approximately rectangular shape as seen in side view), such that the first slide valve element 15A and the second slide valve element 15B of the main valve element 15 are fitted in the coupling body 25 in a state where they are slightly slidable in the horizontal direction and their movement in the front-to-back direction is substantially blocked (particularly, see Fig. 7).

The main valve element 15 fitted in and supported by the coupling body 25 (or the pair of coupling plates 25A, 25B thereof) reciprocates between the cooling position (i.e., upper end position) and the heating position (i.e., lower end position) while being pressed and moved (herein, while the top and bottom faces of the first slide valve element 15A and the second slide valve element 15B of the main valve element 15 are pressed) by the upper part or the lower part (i.e., wide rectangular plane in the horizontal direction) of the support plate portions 25c of a recessed cross-section in the coupling plates 25A, 25B of the coupling body 25 along with the reciprocating movement of the first and second pistons 21, 22.

It should be noted that although the coupling body 25 is made up of the pair of plates (i.e., coupling plates 25A, 25B) having the same dimension and shape in this example, it is needless to mention that in another example, the coupling body 25 may be made of one piece of plate, for example.

### [Operation of six-way valve body 10]

Next, the operation of the six-way valve body 10 having the above- described configuration will be described.

When the main valve element 15 arranged within the main valve housing 11 is in the heating position (i.e., lower end position) (i.e., second communication state as illustrated in Fig. 2), the second operation chamber 32 is allowed to communicate with the port pA as the discharge-side high-pressure port and the first operation chamber 31 is allowed to communicate with the port pD as the suction-side low-pressure port via the four-way pilot valve 90 (described later), whereby a high-pressure refrigerant is introduced into the second operation chamber 32 and the high-pressure refrigerant is discharged from the first operation chamber 31. As a result, the pressure in the second operation chamber 32 at one end (i.e., lower end) of the main valve chamber 12 becomes higher than the pressure in the first operation chamber 31 at the other end (i.e., upper end) of the main valve chamber 12, and as illustrated in Fig. 1, the first and second pistons 21, 22 and the main valve element 15 move upward, so that the stopper portions 25s of the coupling body 25 (or the support plate portions 25c in the coupling plates 25A, 25B thereof) abut and engage the upper coupling cap 11d, and the main valve element 15 is located in the cooling position (i.e., upper end position) (i.e., first communication state as illustrated in Fig. 1).

This configuration allows the port pA and the port pB to communicate with each other (through the first U-turn passage 16A), allows the port pC and the port pD to communicate with each other (through the second U-turn passage 16B), and allows the port pE and the port pF to communicate with each other (through the main valve chamber 12), and thus the cooling operation is performed in the heat pump cooling and heating system.

When the main valve element 15 is in the cooling position (i.e., upper end position) (i.e., first communication state as illustrated in Fig. 1), the first operation chamber 31 is allowed to communicate with the port pA as the discharge-side high-pressure port and the second operation chamber 32 is allowed to communicate with the port pD as the suction-side low-pressure port via the four-way pilot valve 90 (described later), whereby a high-pressure refrigerant is introduced into the first operation chamber 31 and the high-pressure refrigerant is discharged from the second operation chamber 32. As a result, the pressure in the first operation chamber 31 at the other end (i.e., upper end) of the main valve chamber 12 becomes higher than the pressure in the second operation chamber 32 at the one end (i.e., lower end) of the main valve chamber 12, and as illustrated in Fig. 2, the first and second pistons 21, 22 and the main valve element 15 move downward, so that the stopper portions 25s of the coupling body 25 (or the support plate portions 25c in the coupling plates 25A, 25B thereof) abut and engage the lower coupling cap 11e, and the main valve element 15 is located in the heating position (i.e., lower end position) (i.e., second communication state as illustrated in Fig. 2).

This configuration allows the port pA and the port pF to communicate with each other (through the first U-turn passage 16A), allows the port pE and the port pD to communicate with each other (through the second U-turn passage 16B), and allows the port pC and the port pB to communicate with each other (through the main valve chamber 12), and thus the heating operation is performed in the heat pump cooling and heating system.

### [Configuration of four-way pilot valve 90]

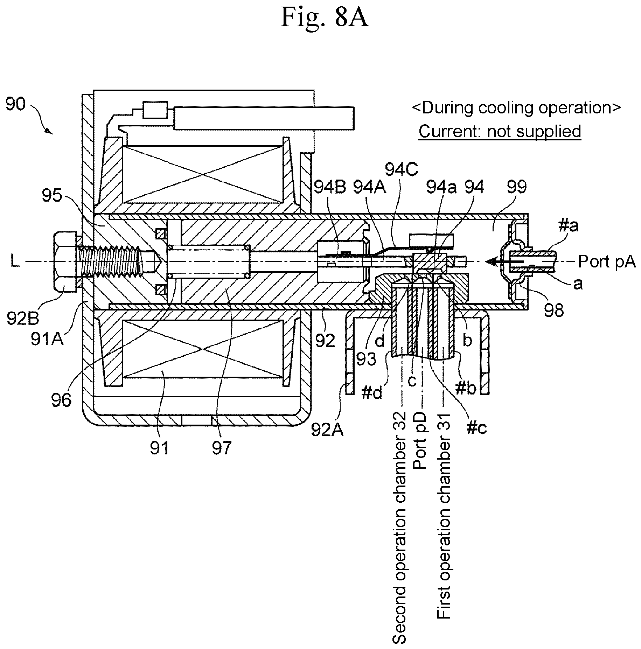

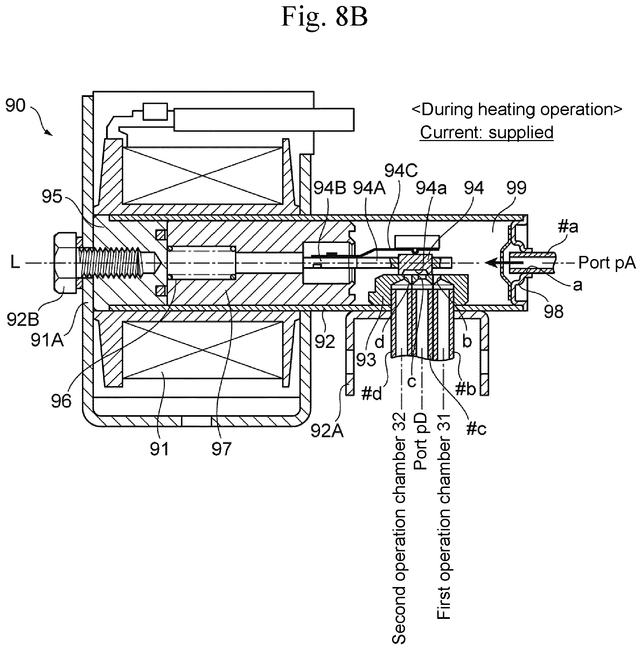

The structure of the four-way pilot valve 90 as a pilot valve is well known. As illustrated in the enlarged views of Fig. 8A and Fig. 8B, the four-way pilot valve 90 includes a valve case 92 made of a cylindrical straight pipe and having an electromagnetic coil 91 externally fitted around and securely fixed to the outer periphery on the proximal end (i.e., left end). The valve case 92 includes an attractor 95, a compression coil spring 96, and a plunger 97 disposed in series in this order from the proximal end.

The left end of the valve case 92 is sealed and joined to a flanged portion (i.e., outer peripheral terrace portion) of the attractor 95 through welding or the like, and the attractor 95 is securely fastened to a cover case 91A that covers the outer periphery of the electromagnetic coil 91 for energization by a bolt 92B.

Meanwhile, the open right end of the valve case 92 has hermetically attached thereto a cap member 98 with a filter, which has a thin pipe insertion hole (i.e., high-pressure introduction port a) for introducing a high-pressure refrigerant, through welding, brazing, swaging, or the like. An area surrounded by the cap member 98, the plunger 97, and the valve case 92 define a valve chamber 99. The valve chamber 99 is adapted to receive a high-pressure refrigerant via the port (i.e., discharge-side high-pressure port) pA through a high-pressure thin pipe #a that is hermetically inserted into the thin pipe insertion hole (i.e., high-pressure introduction port a) of the cap member 98.

In addition, the valve case 92 includes a valve mount 93 having an inner end face as a flat valve seat face hermetically joined thereto between the plunger 97 and the cap member 98 through brazing or the like. This valve seat face (i.e., inner end face) of the valve mount 93 includes, in this order from the distal end (i.e., right end), a port b coupled to the first operation chamber 31 of the six-way valve body 10 via a thin pipe #b, a port c coupled to the port (i.e., suction-side low-pressure port) pD via a thin pipe #c, and a port d coupled to the second operation chamber 32 via a thin pipe #d so as to align laterally at predetermined intervals along the length of the valve case 92 (i.e., horizontal direction).

The plunger 97 disposed to face the attractor 95 is basically cylindrical, and is slidable within the valve case 92 in the axial direction (i.e., the direction along the center line L of the valve case 92). The end of the plunger 97 opposite to the attractor 95 has securely attached thereto a valve body holder 94A, which holds a valve body 94 at its free end so as to be slidable in the thickness direction, as well as a fitting 94B at its proximal end, through press fitting, swaging or the like. This valve body holder 94A has attached thereto a plate spring 94C that urges the valve body 94 in a direction (i.e., thickness direction) to press it against the valve mount 93. The valve body 94 is adapted to slide on the valve seat face of the valve mount 93 along with the horizontal movement of the plunger 97 while the valve body 94 is in contact with the valve seat face of the valve mount 93 so as to switch the communication state of the ports b, c, d opening on the valve seat face of the valve mount 93.

In addition, the valve body 94 includes a recess 94a having a size that allows the adjacent ports b-c or ports c-d of the three ports b to d opening on the valve seat face of the valve mount 93 to selectively communicate with each other.

In addition, the compression coil spring 96 is disposed in a compressed state between the attractor 95 and the plunger 97 and is adapted to urge the plunger 97 in a direction (i.e., to the right in the drawing) to separate it from the attractor 95. In this example, the valve mount 93 (or the left end thereof) acts as a stopper for blocking the rightward movement of the plunger 97. It is needless to mention that this stopper may have a configuration other than the one described above.

It should be noted that the above-described four-way pilot valve 90 is attached to an appropriate position such as the back side of the six-way valve body 10 by a fitting 92A. In addition, in the above-described four-way pilot valve 90, the thin pipe #c is coupled to the port pD as the suction-side low- pressure port, but the thin pipe #c may be coupled to the port pC in which a middle-pressure refrigerant flows.

### [Operation of four-way pilot valve 90]

In the four-way pilot valve 90 having the above-described configuration, when current is not supplied to the electromagnetic coil 91, as illustrated in Fig. 1 and Fig. 8A, the plunger 97 is pressed and moved to the position where its right end abuts the valve mount 93 by the urging force of the compression coil spring 96. In this state, the valve body 94 is located above the port b and the port c, and the port b and the port c are allowed to communicate with each other by the recess 94a, and the port d and the valve chamber 99 are allowed to communicate with each other. Accordingly, a high-pressure fluid flowing into the port (i.e., discharge-side high-pressure port) pA is introduced into the second operation chamber 32 through the high-pressure thin pipe #a → the valve chamber 99 → the port d → the thin pipe #d → the port p12, and the high-pressure fluid in the first operation chamber 31 is discharged through the port p11 → the thin pipe #b → the port b → the recess 94a → the port c → the thin pipe #c → the port (i.e., suction-side low-pressure port) pD.

Meanwhile, when current is supplied to the electromagnetic coil 91, as illustrated in Fig. 2 and Fig. 8B, the plunger 97 is attracted to the position where its left end abuts the attractor 95 by the suction force of the attractor 95 (against the urging force of the compression coil spring 96). At this time, the valve body 94 is located above the port c and the port d, and the port c and the port d are allowed to communicate with each other by the recess 94a, and the port b and the valve chamber 99 are allowed to communicate with each other. Accordingly, a high-pressure fluid flowing into the port (i.e., discharge-side high-pressure port) pA is introduced into the first operation chamber 31 through the high-pressure thin pipe #a → the valve chamber 99 → the port b → the thin pipe #b → the port p11, and the high-pressure fluid in the second operation chamber 32 is discharged through the port p12 → the thin pipe #d → the port d → the recess 94a → the port c → the thin pipe #c → the port (suction-side low-pressure port) pD.

Therefore, when current is not supplied to the electromagnetic coil 91, the main valve element 15 of the six-way valve body 10 moves from the heating position (i.e., second communication state) to the cooling position (i.e., first communication state) to switch the flow channel as described above. Meanwhile, when current is supplied to the electromagnetic coil 91, the main valve element 15 of the six-way valve body 10 moves from the cooling position (i.e., first communication state) to the heating position (i.e., second communication state) to switch the flow channel as described above.

As described above, the six-way switching valve 1 of the present example switches the energization of the electromagnetic four-way pilot valve 90 such that the main valve element 15 forming the six-way valve body 10 moves within the main valve chamber 12 by using the pressure difference between the high-pressure fluid (i.e., fluid flowing in the port pA as a high-pressure part) and the low-pressure fluid (i.e., fluid flowing in the port pD as a low-pressure part) flowing through the six-way switching valve 1, whereby the communication state of the ports (six ports in total) provided for the main valve housing 11 is switched, and the heat pump cooling and heating system can switch from the heating operation to the cooling operation, and from the cooling operation to the heating operation.

### [Operational advantages of flow channel switching valve 1]

As can be understood from the above description, in the flow channel switching valve (i.e., six-way switching valve) 1 of the present example, since the protruding face portion 15t having a height equal to that of the annular seal face 15s is located outside of the annular seal face 15s of the first slide valve element (i.e., high-pressure side slide valve element) 15A in the direction along axis O, the protruding face portion 15t allows the annular seal face 15s of the first slide valve element (i.e., high-pressure side slide valve element) 15A to easily pass over the port opening on the valve seat face of the first main valve mount 13, and it is possible to effectively prevent the annular seal face 15s of the first slide valve element (i.e., high-pressure side slide valve element) 15A from being caught on the port and reduce the rattle of the first slide valve element (i.e., high- pressure side slide valve element) 15A on the valve seat face of the first main valve mount 13. This can effectively increase the sealing property, operability, durability, and stability of the flow channel switching valve (i.e., six-way switching valve), for example.

In addition, in the present example, since the annular seal face 15s on the left face (adjacent to the first main valve mount 13) of the first slide valve element 15A is formed around the opening of the first U-turn passage 16A, and the formation of the annular seal face 15s is limited to an area corresponding to a predetermined width of the annular seal face 15s, it is possible to reduce the contact area between the first slide valve element 15A (or the annular seal face 15s thereof) and the first main valve mount 13 (or the valve seat face thereof) and increase the pressing force (i.e., contact pressure) of the first slide valve element 15A (or the annular seal face 15s thereof) against the first main valve mount 13 (or the valve seat face thereof). This can further increase the sealing property of the flow channel switching valve (i.e., six-way switching valve). In addition, it is possible to reduce the pressure receiving area Sc on the right face of the first slide valve element 15A, and thus the flow channel switching valve (i.e., six-way switching valve) 1 of the present example can be made smaller in size and can have a higher degree of flexibility in the arrangement of the other components of the assembly.

Furthermore, in the present example, since the protruding face portion 15t on the left face (adjacent to the first main valve mount 13) of the first slide valve element 15A is provided so as to be continuous to the end portion of the annular seal face 15s in the direction along axis O, it is possible to more certainly prevent the annular seal face 15s of the first slide valve element (i.e., high- pressure side slide valve element) 15A from being caught on the port and more certainly reduce the rattle of the first slide valve element (i.e., high-pressure side slide valve element) 15A on the valve seat face of the first main valve mount 13.

In addition, in the present example, as seen in the horizontal direction (i.e., the direction perpendicular to axis O), the outer shape (i.e., the outer shape of the O-ring 18) of the pressure receiving face (i.e., pressure receiving area Sc) of the first slide valve element (i.e., high-pressure side slide valve element) 15A adjacent to the second slide valve element (i.e., low-pressure side slide valve element) 15B (i.e., on the back pressure side) is set larger than the outer shape of the annular seal face 15s (or the contact area Sb thereof) of the first slide valve element 15A (specifically, the protruding face portion 15t, which is continuous to the annular seal face 15s, is entirely located inside of the pressure receiving area Sc on the right face of the first slide valve element 15A). Thus, the pressure on the contact face (i.e., annular seal face 15s) of the first slide valve element 15A with respect to the valve seat face of the first main valve mount 13 is distributed approximately uniformly. This can ensure an excellent sealing property, operability, and stability, and can effectively prevent valve leakage.

### (Second example)

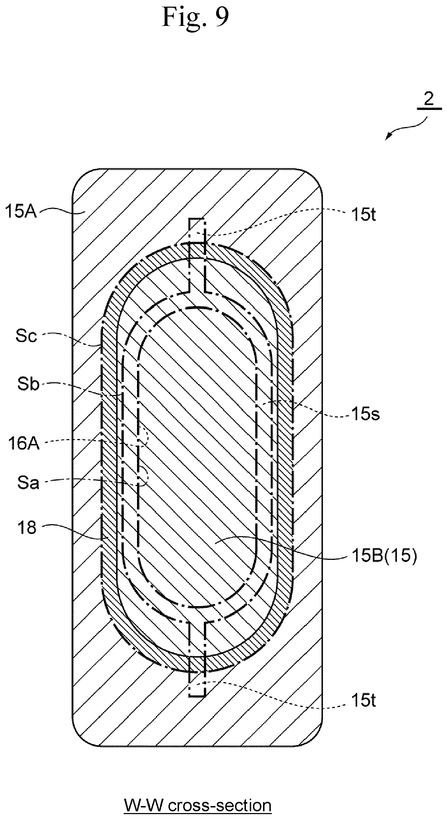

Fig. 9 illustrates a second example of the flow channel switching valve (i.e., six-way switching valve) not representing the present invention.

The flow channel switching valve 2 of the illustrated second example has configurations that are substantially equal to those of the flow channel switching valve 1 of the first example except the main valve element. Therefore, the portions corresponding to the components of the flow channel switching valve 1 of the first example and the portions having the same functions as those of the flow channel switching valve 1 of the first example are denoted by the same reference numerals, and the overlapping descriptions will be omitted. Hereinafter, mainly the differences relating to the main valve element will be described.

In the flow channel switching valve 2 of the illustrated example, as seen in the horizontal direction (i.e., the direction perpendicular to axis O), the outer shape (i.e., the outer shape of the O-ring 18) of the pressure receiving area Sc on the right face of the first slide valve element 15A has a racetrack shape, and part of the outer shape of the pressure receiving area Sc is set smaller than the distal end portion of the protruding face portion 15t on the left face of the first slide valve element 15A. In other words, the proximal end portion (i.e., the portion adjacent to the annular seal face 15s) of the protruding face portion 15t, which is continuous to the annular seal face 15s, is located inside of the pressure receiving area Sc on the right face of the first slide valve element 15A, and the distal end portion (i.e., the portion away from the annular seal face 15s) of the protruding face portion 15t is located outside of the pressure receiving area Sc on the right face of the first slide valve element 15A.

For example, in the flow channel switching valve 1 of the first example, the O-ring 18 as a seal member disposed in the gap (i.e., the sliding face gap) between the first slide valve element 15A and the second slide valve element 15B is deformed. This makes the mold design and assembly more complicated. In addition, the distal end portion of the bar-like protruding face portion 15t extending in the vertical direction forms an area where pressure distribution is small or pressure is hardly generated.

With the above-described configuration, the flow channel switching valve (i.e., six-way switching valve) 2 of the second example can not only produce the same operational advantages as those of the flow channel switching valve 1 of the first example, but also simplify the shape of the O-ring 18 disposed in the gap (i.e., the sliding face gap) between the first slide valve element 15A and the second slide valve element 15B and effectively press the annular seal face 15s and the proximal end portion of the protruding face portion 15t, which have pressure distribution, against the valve seat face of the first main valve mount 13. This can further increase the sealing property of the flow channel switching valve (i.e., six-way switching valve), for example.

### (First embodiment)

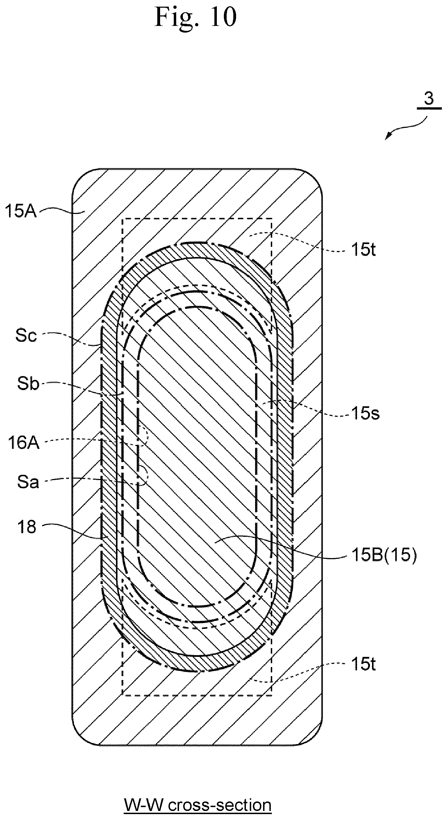

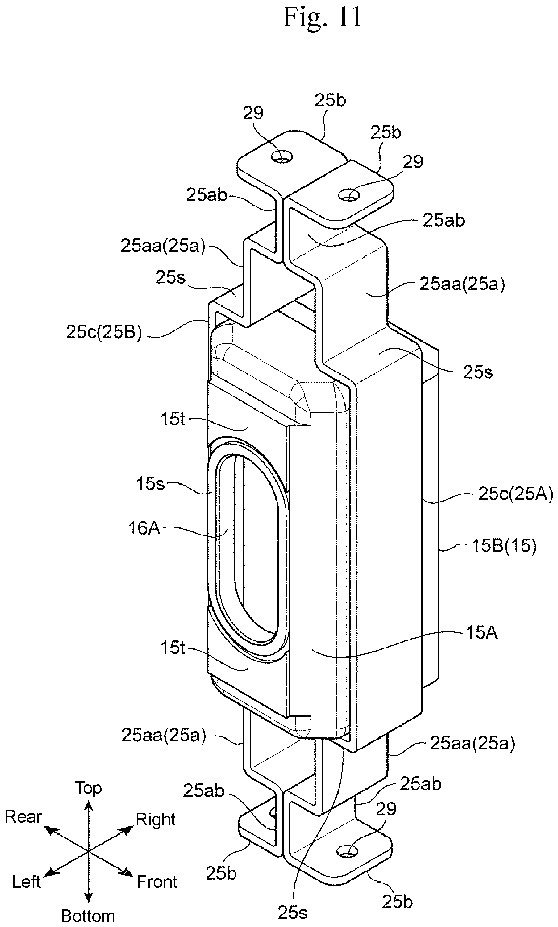

Fig. 10 and Fig. 11 each illustrate a first embodiment of the flow channel switching valve (i.e., six-way switching valve) in accordance with the present invention.

The flow channel switching valve 3 of the illustrated first embodiment has configurations that are substantially equal to those of the flow channel switching valve 2 of the second example except the main valve element. Therefore, the portions corresponding to the components of the flow channel switching valve 2 of the second example and the portions having the same functions as those of the flow channel switching valve 2 of the second example are denoted by the same reference numerals, and the overlapping descriptions will be omitted. Hereinafter, mainly the differences relating to the main valve element will be described.

In the flow channel switching valve 3 of the illustrated embodiment, the upper side and the lower side of the annular seal face 15s provided on the left face of the first slide valve element 15A (i.e., adjacent to the first main valve mount 13) each include a protruding face portion 15t so as to be separated from (that is, at a predetermined distance from) the annular seal face 15s (or the end portion thereof in the direction along axis O), the protruding face portion 15t having a relatively large area and a height equal to that of the annular seal face 15s and a width approximately equal to that of the annular seal face 15s (or the outer shape thereof).

With the above-described configuration, the flow channel switching valve (i.e., six-way switching valve) 3 of the first embodiment can produce the same operational advantages as those of the flow channel switching valve 2 of the second example. In addition, since the protruding face portion 15t on the left face of the first slide valve element 15A (i.e., adjacent to the first main valve mount 13) is provided so as to be separated from the end portion of the annular seal face 15s in the direction along axis O, the protruding face portion 15t does not have pressure distribution, and it is possible to easily control the distribution of pressure (i.e., contact pressure) on the annular seal face 15s of the first slide valve element (i.e., high-pressure side slide valve element) 15A. This can effectively increase the sealing property, operability, durability, and stability of the flow channel switching valve (i.e., six-way switching valve), for example. Furthermore, the annular seal face 15s and the protruding face portion 15t have a groove formed therebetween, which functions as a foreign matter discharge passage. This can also effectively prevent foreign matter from accumulating between the annular seal face 15s and the valve seat face.

In addition, in the first embodiment, since the protruding face portion 15t on the left face of the first slide valve element 15A (i.e., adjacent to the first main valve mount 13) is provided across the entire width of the annular seal face 15s (or the outer shape thereof), the protruding face portion 15t allows the annular seal face 15s of the first slide valve element (i.e., high-pressure side slide valve element) 15A to easily pass over the port opening on the valve seat face of the first main valve mount 13 more certainly. This can more effectively prevent the annular seal face 15s of the first slide valve element (i.e., high-pressure side slide valve element) 15A from being caught on the port and further reduce the rattle of the first slide valve element (i.e., high-pressure side slide valve element) 15A on the valve seat face of the first main valve mount 13.

### (Second embodiment)

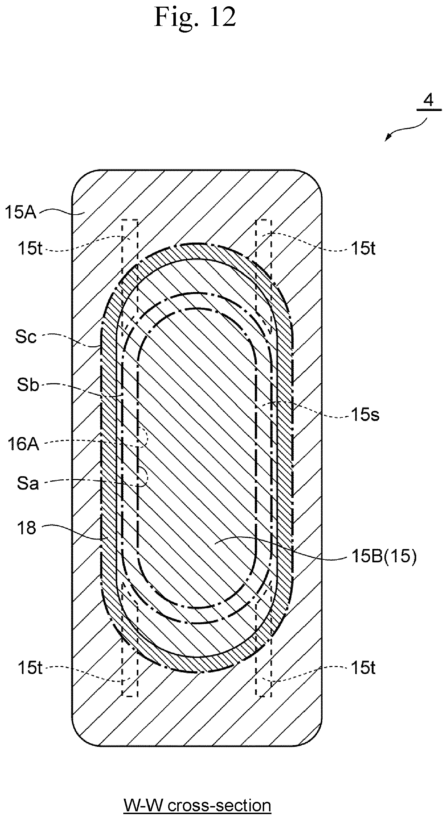

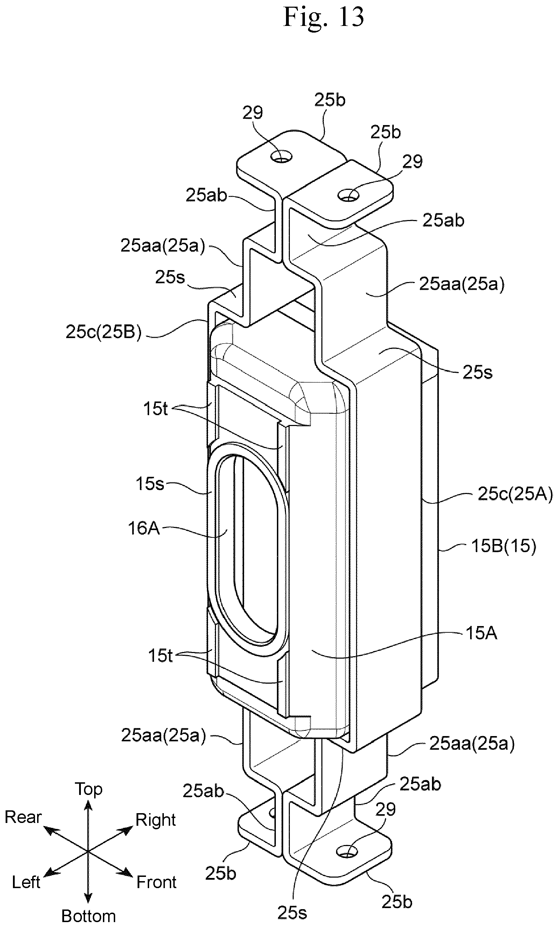

Fig. 12 and Fig. 13 each illustrate a second embodiment of the flow channel switching valve (i.e., six-way switching valve) in accordance with the present invention.

The flow channel switching valve 4 of the illustrated second embodiment has configurations that are substantially equal to those of the flow channel switching valve 3 of the first embodiment except the main valve element. Therefore, the portions corresponding to the components of the flow channel switching valve 3 of the first embodiment and the portions having the same functions as those of the flow channel switching valve 3 of the first embodiment are denoted by the same reference numerals, and the overlapping descriptions will be omitted. Hereinafter, mainly the differences relating to the main valve element will be described.

In the flow channel switching valve 4 of the illustrated embodiment, the upper side and the lower side of the annular seal face 15s provided on the left face of the first slide valve element 15A (i.e., adjacent to the first main valve mount 13) each include, at its opposite side portions in the width direction, approximately bar-like protruding face portions 15t (four in total) so as to be separated from (that is, at a predetermined distance from) the annular seal face 15s (or the end portions thereof in the direction along axis O) and toward the vertical direction (i.e., in the direction along axis O), the protruding face portions 15t each having a height equal to that of the annular seal face 15s and having a width smaller than that of the annular seal face 15s (or the outer shape thereof). In the illustrated example, the protruding face portions 15t each have a width that is approximately equal to the width (i.e., the predetermined width) of the annular seal face 15s having a racetrack shape formed around the opening of the first U- turn passage 16A.

With the above-described configuration, the flow channel switching valve (i.e., six-way switching valve) 4 of the second embodiment can produce the same operational advantages as those of the flow channel switching valve 3 of the first embodiment. In addition, since the protruding face portions 15t on the left face of the first slide valve element 15A (i.e., adjacent to the first main valve mount 13) are provided at least at the opposite side portions of the annular seal face 15s in the width direction, even when the first slide valve element (i.e., high-pressure side slide valve element) 15A in a state of being inclined slides on the valve seat face of the first main valve mount 13, for example, the protruding face portion 15t comes into contact with the valve seat face of the first main valve mount 13 before the annular seal face 15s (or one side portion thereof) of the first slide valve element (i.e., high-pressure side slide valve element) 15A comes into contact with the valve seat face of the first main valve mount 13. This can certainly increase the durability of the flow channel switching valve (i.e., six-way switching valve).

In addition, in the second embodiment, it is possible to reduce the contact area between the protruding face portion 15t of the first slide valve element 15A and the valve seat face of the first main valve mount 13 and increase the pressing force (i.e., contact pressure) of the first slide valve element 15A against the valve seat face of the first main valve mount 13 as compared to the first embodiment, for example. This can further increase the sealing property of the flow channel switching valve (i.e., six-way switching valve).

### (Third embodiment)

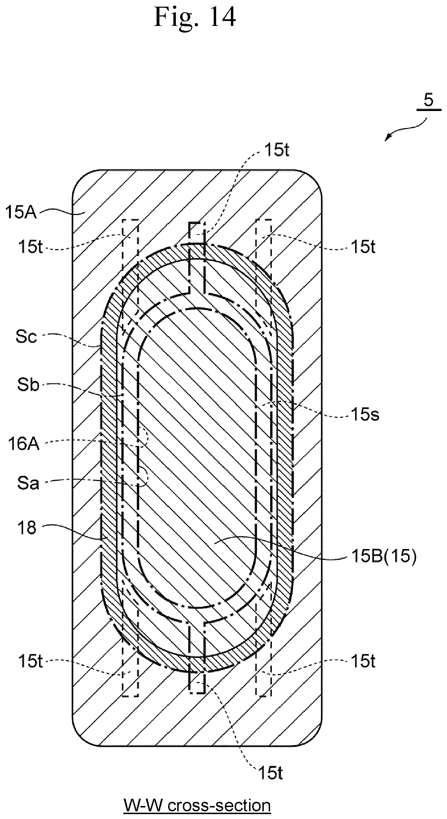

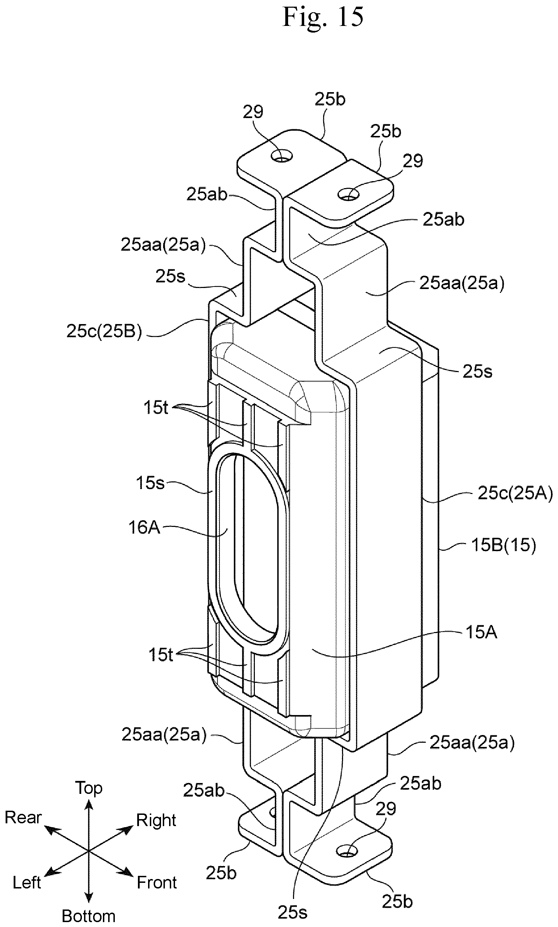

Fig. 14 and Fig. 15 each illustrate a third embodiment of the flow channel switching valve (i.e., six-way switching valve) in accordance with the present invention.

The flow channel switching valve 5 of the illustrated third embodiment has configurations that are substantially equal to those of the flow channel switching valve 4 of the second embodiment except the main valve element. Therefore, the portions corresponding to the components of the flow channel switching valve 4 of the second embodiment and the portions having the same functions as those of the flow channel switching valve 4 of the second embodiment are denoted by the same reference numerals, and the overlapping descriptions will be omitted. Hereinafter, mainly the differences relating to the main valve element will be described.

In the flow channel switching valve 5 of the illustrated embodiment, the upper end and the lower end of the annular seal face 15s provided on the left face of the first slide valve element 15A (i.e., adjacent to the first main valve mount 13) each include, at its central portion in the width direction, an approximately bar-like protruding face portion 15t (two in total) so as to be continuous to the annular seal face 15s toward the vertical direction (i.e., in the direction along axis O), the protruding face portion 15t having a height equal to that of the annular seal face 15s and having a width smaller than that of the annular seal face 15s (or the outer shape thereof). Further, the upper side and the lower side of the annular seal face 15s each include, at its opposite side portions in the width direction, approximately bar-like protruding face portions 15t (four in total) so as to be separated from (that is, at a predetermined distance from) the annular seal face 15s (or the end portions thereof in the direction along axis O) and toward the vertical direction (i.e., in the direction along axis O), the protruding face portions 15t each having a height equal to that of the annular seal face 15s and having a width smaller than that of the annular seal face 15s (or the outer shape thereof).

That is, the flow channel switching valve 5 (i.e., the protruding face portions 15t thereof) of the present embodiment has the configurations in which the flow channel switching valve 1 (i.e., the protruding face portions 15t thereof) of the first example or the flow channel switching valve 2 (i.e., the protruding face portions 15t thereof) of the second example is combined with the flow channel switching valve 4 (i.e., the protruding face portions 15t thereof) of the second embodiment.

With the above-described configuration, it is needless to mention that the flow channel switching valve (i.e., six-way switching valve) 5 of the third embodiment can produce not only the operational advantages of the flow channel switching valve 1 of the first example or the flow channel switching valve 2 of the second example but also the operational advantages of the flow channel switching valve 4 of the second embodiment.

It should be noted that in the flow channel switching valves 1 to 5 of the above-described examples and embodiments, the configuration of driving the main valve element 15 within the main valve chamber 12 with use of the four-way pilot valve 90 has been described. However, a motor may be used for example instead of the four-way pilot valve 90 to drive the main valve element 15 within the main valve chamber 12.

Furthermore, in the flow channel switching valves 1 to 5 of the above- described examples and embodiments, the examples of the six-way switching valve in the heat pump cooling and heating system have been described. However, it is needless to mention that the number or position of ports provided for the main valve housing 11 (or the main valve chamber 12 thereof), the configuration or shape of the main valve housing 11, the configuration or shape of the main valve element 15 and the coupling body 25 arranged within the main valve housing 11 (or the main valve chamber 12 thereof), and the like are not limited to the illustrated examples, and it needless to specifically mention that the present invention is applicable to a multi-way switching valve other than the six-way switching valve.

In addition, it is needless to mention that the flow channel switching valves 1 to 5 of the present examples and embodiments may be incorporated into not only the heat pump cooling and heating system but also to the other systems, devices, equipment, and the like.

### Reference Signs List

- 1: Flow channel switching valve (six-way switching valve) (first example)
- 2: Flow channel switching valve (six-way switching valve) (second example)
- 3: Flow channel switching valve (six-way switching valve) (first embodiment)
- 4: Flow channel switching valve (six-way switching valve) (second embodiment)
- 5: Flow channel switching valve (six-way switching valve) (third embodiment)
- 10: Six-way valve body
- 11: Main valve housing
- 11A: Upper end cap member
- 11B: Lower end cap member
- 11a: First piston portion
- 11b: Second piston portion
- 11c: Trunk portion
- 12: Main valve chamber
- 13: First main valve mount (valve seat)
- 14: Second main valve mount (valve seat)
- 15: Main valve element
- 15A: First slide valve element (high-pressure side slide valve element)
- 15B: Second slide valve element (low-pressure side slide valve element)
- 15a: Inner flanged portion of first slide valve element
- 15b: Fitting protrusion of second slide valve element
- 15s: Annular seal face of first slide valve element (high-pressure side slide valve element)
- 15t: Protruding face portion
- 16A: First U-turn passage (high-pressure side U-turn passage)
- 16B: Second U-turn passage (low-pressure side U-turn passage)
- 18: O-ring (annular seal member)
- 21: First piston
- 22: Second piston
- 25: Coupling body
- 25A, 25B: Pair of coupling plates
- 31: First operation chamber
- 32: Second operation chamber
- 90: Four-way pilot valve
- pA, pB, pC, pD, pE, pF: Port

## Claims

1. A flow channel switching valve (3; 4; 5) comprising:
a main valve housing (11) forming a main valve chamber (12);
a first main valve mount (13) arranged within the main valve chamber (12), the first main valve mount (13) having a valve seat face with a plurality of ports (pB, pA, pF);
a second main valve mount (14) arranged within the main valve chamber (12) opposite to the first main valve mount (13) with respect to an axis (O) of the main valve chamber (12), the second main valve mount (14) having a valve seat face with a plurality of ports (pC, pD, pE); and
a main valve element (15) arranged within the main valve chamber (12) in a movable manner in the axial direction, the main valve element (15) including a pair of slide valve elements (15A, 15B) of a high-pressure side slide valve element (15A) and a low-pressure side slide valve element (15B), the high-pressure side slide valve element (15A) being slidable on the valve seat face of the first main valve mount (13) and having a high-pressure side U-turn passage adapted to receive a relatively high-pressure fluid, the low-pressure side slide valve element (15B) being slidable on the valve seat face of the second main valve mount (14) and having a low-pressure side U-turn passage adapted to receive a relatively low-pressure fluid,
wherein:
the pair of slide valve elements (15A, 15B) is integrally movable in the axial direction and individually slidable in a direction perpendicular to the axis (O),
the main valve element (15) is moved within the main valve chamber (12) so that communication of the plurality of ports (pB, pA, pF, pC, pD, pE) in each of the first main valve mount (13) and the second main valve mount (14) is switched,
the pair of slide valve elements (15A, 15B) includes an annular seal face (15s) around an opening of the high-pressure side U-turn passage of the high-pressure side slide valve element (15A), the annular seal face (15s) being adapted to be in contact with the valve seat face, and
a protruding face portion (15t) is provided outside of the annular seal face (15s) of the high-pressure side slide valve element (15A) in the axial direction,
**characterized in that**
the protruding face portion (15t) is provided so as to be separated from an end portion of the annular seal face (15s) in the axial direction, and
the protruding face portion (15t) has a height in a direction perpendicular to the axial direction equal to that of the annular seal face (15s).

2. The flow channel switching valve according to claim 1, wherein the protruding face portion (15t) is provided so as to extend in the axial direction.

3. The flow channel switching valve according to claim 1 or 2, wherein the protruding face portion (15t) is provided at least in a central portion of the annular seal face(15s) in a width direction.

4. The flow channel switching valve according to claim 1 or 2, wherein the protruding face portion (15t) is provided at least in each of opposite side portions of the annular seal face (15s) in a width direction.

5. The flow channel switching valve according to claim 1 or 2, wherein the protruding face portion (15t) is provided across an entire width of the annular seal face (15s).

6. The flow channel switching valve according to claim 1,
wherein:
the protruding face portion (15t) includes portions in each of opposite side portions of the annular seal face (15s) in a width direction separated from the annular seal face (15s) and further includes a portion continuous to the annular seal face (15s) extending toward the axial direction from a central portion of the annular seal face (15s) in a width direction.

7. The flow channel switching valve according to any one of claims 1 to 6, wherein the annular seal face (15s) is formed around the opening of the high-pressure side U-turn passage, the annular seal face (15s) having a predetermined width.

8. The flow channel switching valve according to any one of claims 1 to 7, wherein as seen in the direction perpendicular to the axis, an outer shape of a pressure receiving face of the high-pressure side slide valve element adjacent to the low-pressure side slide valve element is set larger than an outer shape of the annular seal face (15s).

9. The flow channel switching valve according to claim 8, wherein an annular seal member is disposed between the high-pressure side slide valve element (15A) and the low-pressure side slide valve element (15B), and an outer shape of the seal member is set larger than the outer shape of the annular seal face (15s).

10. The flow channel switching valve according to any one of claims 1 to 9, wherein:
the high-pressure side slide valve element (15A) has a tubular shape, the low-pressure side slide valve element (15B) includes in one side face thereof a fitting protrusion (15b) slidably fitted in the high-pressure side slide valve element (15a), when the fitting protrusion (15b) is fitted in the high-pressure side slide valve element (15A), an inner peripheral face of the high-pressure side slide valve element (15A) and an end face of the fitting protrusion (15b) form the high-pressure side U-turn passage,
the high-pressure side slide valve element (15A) and the low-pressure side slide valve element (15B) are integrally movable in the axial direction and individually slidable in the direction perpendicular to the axis (O), and
the low-pressure side slide valve element (15B) includes in another side face thereof the low-pressure side U-turn passage.

## Patentansprüche

1. Strömungskanal-Umschaltventil (3; 4; 5), umfassend:
ein Hauptventilgehäuse (11), das eine Hauptventilkammer (12) bildet;
eine erste Hauptventillagerung (13), die innerhalb der Hauptventilkammer (12) angeordnet ist, welche erste Hauptventillagerung (13) eine Ventilsitzfläche mit einer Mehrzahl von Öffnungen (pB, pA, pF) aufweist;
eine zweite Hauptventillagerung (14), die innerhalb der Hauptventilkammer (12) der ersten Hauptventillagerung (13) bezüglich einer Achse (O) der Hauptventilkammer (12) gegenüberliegend angeordnet ist, welche zweite Hauptventillagerung (14) eine Ventilsitzfläche mit einer Mehrzahl von Öffnungen (pC, pD, pE) aufweist; und
ein Hauptventilelement (15), das innerhalb der Hauptventilkammer (12) in axialer Richtung beweglich angeordnet ist, welches Hauptventilelement (15) ein Paar von Gleitventilelementen (15A, 15B), nämlich ein hochdruckseitiges Gleitventilelement (15A) und ein niederdruckseitiges Gleitventilelement (15B) umfasst, von denen das hochdruckseitige Gleitventilelement (15A) gleitend auf der Ventilsitzfläche der ersten Hauptventillagerung (13) angeordnet ist und einen hochdruckseitigen Umkehrkanal umfasst, dazu ausgebildet, ein unter relativ hohem Druck stehendes Fluid aufzunehmen, von denen das niederdruckseitige Gleitventilelement (15B) gleitend auf der Ventilsitzfläche der zweiten Hauptventillagerung (14) angeordnet ist und einen niederdruckseitigen Umkehrkanal umfasst, dazu ausgebildet, ein unter relativ niedrigem Druck stehendes Fluid aufzunehmen,
wobei
das Paar von Gleitventilelementen (15A, 15B) gemeinsam in der axialen Richtung beweglich und einzeln in einer Richtung senkrecht zu der Achse (O) verschiebbar ist,
das Hauptventilelement (15) innerhalb der Hauptventilkammer (12) derart beweglich ist, dass eine Verbindung der Mehrzahl von Öffnungen (pB, pA, pF, pC, pD, pE) in jeder von der ersten Hauptventillagerung (13) und der zweiten Hauptventillagerung (14) umgeschaltet wird,
das Paar von Gleitventilelementen (15A, 15B) eine ringförmige Dichtungsfläche (15s) um eine Öffnung des hochdruckseitigen Umkehrkanals des hochdruckseitigen Gleitventilelements (15A) umfasst, welche ringförmige Dichtfläche (15s) dazu ausgebildet ist, in Kontakt mit der Ventilsitzfläche zu stehen, und
ein vorspringender Flächenbereich (15t) außerhalb der ringförmigen Dichtungsfläche (15s) des hochdruckseitigen Gleitventilelements (15A) in der axialen Richtung vorgesehen ist,
**dadurch gekennzeichnet, dass** der vorspringende Flächenbereich (15t) derart vorgesehen ist, dass er von einem Endbereich der ringförmigen Dichtfläche (15s) in axialer Richtung getrennt ist,
und der vorspringende Flächenbereich (15t) in einer Richtung senkrecht zu der axialen Richtung eine Höhe aufweist, die gleich derjenigen der ringförmigen Dichtfläche (15s) ist.

2. Strömungskanal-Umschaltventil gemäß Anspruch 1, bei welchem der vorspringende Flächenbereich (15t) derart angeordnet ist, dass er sich in der axialen Richtung erstreckt.

3. Strömungskanal-Umschaltventil gemäß Anspruch 1 oder 2, bei welchem der vorspringende Flächenbereich (15t) zumindest in einem zentralen Teil der ringförmigen Dichtfläche (15s) bezüglich einer Breitenrichtung angeordnet ist.

4. Strömungskanal-Umschaltventil gemäß Anspruch 1 oder 2, bei welchem der vorspringende Flächenbereich (15t) zumindest auf jeder der gegenüberliegenden Seitenbereiche der ringförmigen Dichtfläche (15s) in einer Breitenrichtung vorgesehen ist.

5. Strömungskanal-Umschaltventil gemäß Anspruch 1 oder 2, bei welchem der vorspringende Flächenbereich (15t) über eine gesamte Breite der ringförmigen Dichtfläche (15s) angeordnet ist.

6. Strömungskanal-Umschaltventil gemäß Anspruch 1,
bei welchem der vorspringende Flächenbereich (15t) Bereiche in jedem der gegenüberliegenden Seitenbereiche der ringförmigen Dichtfläche (15s) in einer Breitenrichtung aufweist, die von der richtförmigen Dichtfläche (15s) getrennt sind, und ferner einen Bereich umfasst, der sich kontinuierlich mit der ringförmigen Dichtfläche (15s) in der axialen Richtung von einem zentralen Teil der ringförmigen Dichtfläche (15s) bezüglich einer Breitenrichtung erstreckt.

7. Strömungskanal-Umschaltventil gemäß einem der Ansprüche 1 bis 6, bei welchem die ringförmige Dichtfläche (15s) um die Öffnung des hochdruckseitigen Umkehrkanals ausgebildet ist, wobei die ringförmige Dichtfläche (15s) eine vorbestimmte Breite aufweist.

8. Strömungskanal-Umschaltventil gemäß einem der Ansprüche 1 bis 7, bei welchem, betrachtet in einer Richtung senkrecht zu der Achse, eine äußere Form einer Druckaufnahmefläche des hochdruckseitigen Gleitventilelements, die zu dem niederdruckseitigen Gleitventilelement benachbart ist, größer bemessen ist als eine äußere Form der richtförmigen Dichtfläche (15s).

9. Strömungskanal-Umschaltventil gemäß Anspruch 8, bei welchem ein ringförmiges Dichtungselement zwischen dem hochdruckseitigen Gleitventilelement (15A) und dem niederdruckseitigen Gleitventilelement (15B) angeordnet ist, und eine äußere Form des Dichtungselements größer bemessen ist als die äußere Form der ringförmigen Dichtfläche (15s).

10. Strömungskanal-Umschaltventil gemäß einem der Ansprüche 1 bis 9, bei welchem
das hochdruckseitige Gleitventilelement (15A) eine rohrförmige Form hat, das niederdruckseitige Gleitventilelement (15B) auf einer Seitenfläche einen Passvorsprung (15b) hat, der gleitend in das hochdruckseitige Gleitventilelement (15a) eingepasst ist, und eine innere Umfangsfläche des hochdruckseitigen Gleitventilelements (15A) und eine Stirnfläche des Passvorsprungs (15b) den hochdruckseitigen Umkehrkanal bilden, wenn der Passvorsprung (15b) in das hochdruckseitige Gleitventilelement (15a) eingepasst ist,
das hochdruckseitige Gleitventilelement (15A) und niederdruckseitige Gleitventilelement (15B) einteilig in der axialen Richtung beweglich und individuell in der Richtung senkrecht zu der Achse (O) verschiebbar sind, und
das niederdruckseitige Gleitventilelement (15B) auf einer anderen Seitenfläche den niederdruckseitigen Umkehrkanal umfasst.

## Revendications

1. Soupape de commutation de canal d'écoulement (3 ; 4 ; 5) comprenant :
un boîtier de soupape principale (11) formant une chambre de soupape principale (12) ;
un premier support de soupape principale (13) agencé dans la chambre de soupape principale (12), le premier support de soupape principale (13) ayant une face de siège de soupape avec une pluralité d'orifices (pB, pA, pF) ;
un second support de soupape principale (14) agencé dans la chambre de soupape principale (12), opposé au premier support de soupape principale (13) par rapport à un axe (O) de la chambre de soupape principale (12), le second support de soupape principale (14) ayant une face de siège de soupape avec une pluralité d'orifices (pC, pD, pE) ; et
un élément de soupape principale (15) agencé dans la chambre de soupape principale (12) d'une manière mobile dans la direction axiale, l'élément de soupape principale (15) comprenant des éléments de soupape coulissants (15A, 15B) d'un élément de soupape coulissant du côté de la haute pression (15A) et d'un élément de soupape coulissant du côté de la basse pression (15B), l'élément de soupape coulissant du côté de la haute pression (15A) pouvant coulisser sur la face de siège de soupape du premier support de soupape principale (13) et ayant un passage de demi-tour du côté de la haute pression adapté pour recevoir un fluide à relativement haute pression, l'élément de soupape coulissant du côté de la basse pression (15B) pouvant coulisser sur la face de siège de soupape du second support de soupape principale (14) et ayant un passage de demi-tour du côté de la basse pression adapté pour recevoir un fluide à relativement basse pression,
dans laquelle :
la paire d'éléments de soupape coulissants (15A, 15B) est mobile de manière solidaire dans la direction axiale et individuellement coulissante dans une direction perpendiculaire à l'axe (O),
l'élément de soupape principale (15) est déplacé à l'intérieur de la chambre de soupape principale (12) de sorte que la communication de la pluralité d'orifices (pB, pA, pF, pC, pD, pE) dans chacun parmi le premier support de soupape principale (13) et le second support de soupape principale (14) est commutée,
la paire d'éléments de soupape coulissants (15A, 15B) comprend une face de joint d'étanchéité annulaire (15s) autour d'une ouverture du passage de demi-tour du côté de la haute pression de l'élément de soupape coulissant du côté de la haute pression (15A), la face de joint d'étanchéité annulaire (15s) étant adaptée pour être en contact avec la face de siège de soupape, et
une partie de face en saillie (15t) est prévue à l'extérieur de la face de joint d'étanchéité annulaire (15s) de l'élément de soupape coulissant du côté de la haute pression (15A) dans la direction axiale,
**caractérisée en ce que** :
la partie de face en saillie (15t) est prévue afin d'être séparée d'une partie d'extrémité de la face de joint d'étanchéité annulaire (15s) dans la direction axiale,
et la partie de face en saillie (15t) a une hauteur dans une direction perpendiculaire à la direction axiale égale à celle de la face de joint d'étanchéité annulaire (15s).

2. Soupape de commutation de canal d'écoulement selon la revendication 1, dans laquelle la partie de face en saillie (15t) est prévue afin de s'étendre dans la direction axiale.

3. Soupape de commutation de canal d'écoulement selon la revendication 1 ou 2, dans laquelle la partie de face en saillie (15t) est prévue au moins dans une partie centrale de la face de joint d'étanchéité annulaire (15s) dans une direction de largeur.

4. Soupape de commutation de canal d'écoulement selon la revendication 1 ou 2, dans laquelle la partie de face en saillie (15t) est prévue au moins dans chacune des parties latérales opposées de la face de joint d'étanchéité annulaire (15s) dans une direction de largeur.

5. Soupape de commutation de canal d'écoulement selon la revendication 1 ou 2, dans laquelle la partie de face en saillie (15t) est prévue sur toute la largeur de la face de joint d'étanchéité annulaire (15s).

6. Soupape de commutation de canal d'écoulement selon la revendication 1, dans laquelle :
la partie de face en saillie (15t) comprend des parties dans chacune des parties latérales opposées de la face de joint d'étanchéité annulaire (15s) dans une direction de largeur séparées de la face de joint d'étanchéité annulaire (15s) et comprend en outre une partie continue vers la face de joint d'étanchéité annulaire (15s) s'étendant vers la direction axiale à partir d'une partie centrale de la face de joint d'étanchéité annulaire (15s) dans une direction de largeur.

7. Soupape de commutation de canal d'écoulement selon l'une quelconque des revendications 1 à 6, dans laquelle la face de joint d'étanchéité annulaire (15s) est formée autour de l'ouverture du passage de demi-tour du côté de la haute pression, la face de joint d'étanchéité annulaire (15s) ayant une largeur prédéterminée.

8. Soupape de commutation de canal d'écoulement selon l'une quelconque des revendications 1 à 7, dans laquelle, comme observé dans la direction perpendiculaire à l'axe, une forme externe d'une face de réception de pression de l'élément de soupape coulissant du côté de la haute pression adjacent à l'élément de soupape coulissant du côté de la basse pression est plus importante qu'une forme externe de la face de joint d'étanchéité annulaire (15s).

9. Soupape de commutation de canal d'écoulement selon la revendication 8, dans laquelle un élément de joint d'étanchéité annulaire est disposé entre l'élément de soupape coulissant du côté de la haute pression (15A) et l'élément de soupape coulissant du côté de la basse pression (15B), et une forme externe de l'élément de joint d'étanchéité est plus importante que la forme externe de la face de joint d'étanchéité annulaire (15s).

10. Soupape de commutation de canal d'écoulement selon l'une quelconque des revendications 1 à 9, dans laquelle :
l'élément de soupape coulissant du côté de la haute pression (15A) a une forme tubulaire, l'élément de soupape coulissant du côté de la basse pression (15B) comprend, dans sa face latérale, une saillie d'ajustement (15b) montée, de manière coulissante, dans l'élément de soupape coulissant du côté de la haute pression (15a), lorsque la saillie d'ajustement (15b) est montée dans l'élément de soupape coulissant du côté de la haute pression (15A), une face périphérique interne de l'élément de soupape coulissant du côté de la haute pression (15A) et une face d'extrémité de la saillie d'ajustement (15b) forment le passage de demi-tour du côté de la haute pression,
l'élément de soupape coulissant du côté de la haute pression (15A) et l'élément de soupape coulissant du côté de la basse pression (15B) sont mobiles de manière solidaire dans la direction axiale et peuvent coulisser individuellement dans la direction perpendiculaire à l'axe (O), et
l'élément de soupape coulissant du côté de la basse pression (15B) comprend, dans son autre face latérale, le passage de demi-tour du côté de la basse pression.
